# EUROPEAN PATENT SPECIFICATION

(11) **EP 1 717 273 B1**
(45) Date of publication and mention of the grant of the patent: **04.01.2012**
(21) Application number: 05710160.2
(22) Date of filing: 14.02.2005
(51) Int. Cl.: C08L 79/02, C08J 3/00, C08K 3/36

(54) **ORGANIC-INORGANIC COMPOSITE NANOFIBER, ORGANIC-INORGANIC COMPOSITE STRUCTURE AND METHOD FOR PRODUCING THOSE**
ORGANISCH-ANORGANISCHE VERBUNDNANOFASER, ORGANISCH-ANORGANISCHE VERBUNDSTRUKTUR UND HERSTELLUNGSVERFAHREN DAFÜR
NANOFIBRE COMPOSITE ORGANIQUE-INORGANIQUE, STRUCTURE COMPOSITE ORGANIQUE-INORGANIQUE ET PROCEDE POUR PRODUIRE CELLES -CI

(30) Priority: 18.02.2004 JP 2004041335
(43) Date of publication of application: 02.11.2006
(73) Proprietor: KAWAMURA INSTITUTE OF CHEMICAL RESEARCH, Sakura-shi Chiba 285-0078 (JP)
(72) Inventor: JIN, Ren-Hua, Tokyo, 1450063 (JP); YUAN, Jian-Jun, Chiba, 2850817 (JP)
(74) Representative: Albrecht, Thomas
(86) International application number: PCT/JP2005/002152
(87) International publication number: WO 2005/078021

(56) References cited:
- WO-A1-01/27368
- JP-A- 2 263 707
- JP-A- 3 212 451
- JP-A- 11 071 519
- JP-A- 2001 335 709
- JIN R.H. ET AL: 'Polyamine o Shin to suru Silica Nnofiber to Sono Keitai Seigyo' POLYMER PREPRINTS vol. 53, no. 01, 01 September 2004, JAPAN, pages 4540 - 4541, XP002991875

## Description

### FIELD OF TECHNOLOGY

The present invention relates to an organic-inorganic hybrid nanofiber composed of a crystalline polymer filament made of a polymer having a straight-chain polyethyleneimine skeleton and a silica covering the aforementioned crystalline polymer filament, a structure composed of the aforementioned organic-inorganic hybrid nanofibers, and a method for producing the same.

### BACKGROUND ART

It is known that a material having a nanosize structure may exhibit properties which are different from those in a bulk state. In particular, a nanofiber having a diameter of nanometer order and a length of not less than several tens of the diameter exhibits a size effect which is specific to the form of a fiber due to a high aspect ratio thereof. For this reason, a nanofiber has been a focus of attention as one kind of high-tech material. Silica nanofibers have a high aspect ratio and a large surface area, which are specific to a nanofiber, and at the same time, have various physical properties such as semiconductor properties, conducting properties, surface physical properties, mechanical strength, and the like, which are specific to an inorganic material. Therefore, in the fields of various high-tech materials such as the field of electronic materials or the bioscience field, application and development thereof are highly desired. In addition, a structure is formed by assembling one nanofiber (one dimension) into the form of a fabric (two dimension) or a bulk (three dimension) while properties of the nanofiber are maintained, and thereby, various remarkable uses of silica nanofibers can be expected.

In particular, a product in which a silica nanofiber is combined with an organic material has wide applicability. If a silica nanofiber is hybridized with a material which can trap microorganisms, the hybrid can be applied as a biofilter, and if a silica nanofiber is hybridized with a material which can trap a sensor molecule, the hybrid can be expected to be applied as a biosensor. In addition, if a silica nanofiber is hybridized with a material which can adsorb to a harmful material, the hybrid can be expected to be applied as a filter exhibiting superior efficacy, in addition to porosity and molecular selectivity which the silica nanofiber possesses, per se.

As described above, by hybridizing an organic material having a specified function with an inorganic nanofiber, it can be expected to obtain a novel material which is not known heretofore. However, many attempts to obtain such hybrids are in a study phase. As an example of a nanofiber in which an organic material and an inorganic material are compounded, for example, an organic-inorganic nanofiber in which a low-molecular organic compound such as a cholesterol derivative or a sugar chain having a helical fiber structure is compounded with a silica is described (see Patent Documents 1 and 2). However, the aforementioned low-molecular organic compounds are simply employed as a template for forming a silica nanofiber, and they fail to exhibit functions which are specific to nanofibers.

In addition, as a composite material of a nanometer size, metal oxide-based composite fine particles are described in which an organic compound having plural amino groups per molecule is homogeneously distributed in amorphous metal oxide spherical fine particles (see Patent Document 3). However, the aforementioned composite fine particles are in the form of particles having an aspect ratio of approximately 1:1, and for this reason, it is clear that only the aforementioned composite particles cannot be assembled or integrated. Therefore, it has been difficult to form a structure maintaining properties which are specific to a nano-structure material.

On the other hand, as a method for producing a nanofiber in which an organic material and an inorganic material are compounded, a method for forming a silica nanofiber is described in which the aforementioned low-molecular organic material is employed as a template, and the silica nanofiber is formed along with the aforementioned template (see Patent Documents 1 and 2). However, in the case of employing the aforementioned organic material, production steps are complex, and for this reason, it requires a long time for producing a composite. For this reason, in view of industrial productivity, a method for producing the same has been desired which is simple and can be carried out in a shorter time. In addition, various studies of technologies in which a nano-structure material such as a silica nanofiber is controlled to have a structure such as the aforementioned filter structure have been carried out. However, it has been difficult to produce a structure of a nanofiber including an organic material such as a silica.
Patent Document 1:
   Japanese Unexamined Patent Application, First Publication No. 2000-203826
Patent Document 2:
   Japanese Unexamined Patent Application, First Publication No. 2001-253705
Patent Document 3:
   Japanese Unexamined Patent Application, First
   Publication No. H02-263707

### DISCLOSURE OF THE INVENTION

An objective to be achieved by the present invention is to provide an organic-inorganic hybrid nanofiber which can trap or concentrate various substances in a structure, and can be assembled in a high degree, an organic-inorganic hybrid structure composed of the aforementioned organic-inorganic hybrid nanofiber, and a simple method for producing the same.

When a nanofiber of a silica is produced, it is believed that (i) a template for deriving a nanofiber form, (ii) a scaffold for fixing the silica, and (iii) a catalyst for polymerizing the silica source are essential.

The present invention is characterized in that as an organic material satisfying the aforementioned three essential elements, a polymer having a straight-chain polyethyleneimine skeleton is employed. The straight-chain polyethyleneimine is soluble in water, but can form a water-insoluble crystal in the presence of water molecules at room temperature. In the polymers having the aforementioned straight-chain polyethyleneimine in the skeleton, the straight-chain polyethyleneimine skeleton moieties of mutual polymers form crystals, and thereby, crystalline polymer filaments with a nanometer diameter having properties of crystals can be produced. The crystalline polymer filament functions as a template. In addition, on the surface of the aforementioned crystalline polymer filament, there are many free polyethyleneimine chains which are, unavoidably, not involved in crystallization. These free chains are in the condition of drooping down on the surface of the aforementioned crystalline polymer filament. These chains are scaffolds for fixing the silica polymerized near these chains, and act as a catalyst for polymerizing a silica source at the same time.

The ethyleneimine unit in the straight-chain polyethyleneimine skeleton can adsorb various ionic substances such as metal ions. In addition, the polymer having the aforementioned straight-chain polyethyleneimine skeleton can easily make a block or graft with other polymers. For this reason, various functions originating in the aforementioned other polymer moieties can be provided. In the present invention, the crystalline polymer filament of the polymer having the straight-chain polyethyleneimine skeleton is employed as a template, and the aforementioned crystalline polymer filament is covered with a chemically stable silica. Thereby, an organic-inorganic nanofiber having superior functions which conventional materials fail to have can be attained.

In addition, in the present invention, it was discovered that the aforementioned crystalline polymer filament provides a hydrogel of which the form can be easily controlled in the presence of water. After the aforementioned hydrogel is formed into a desirable form, by carrying out a sol-gel reaction, an organic-inorganic hybrid structure composed of the aforementioned organic-inorganic nanofiber can be attained.

In addition, it was discovered that the aforementioned crystalline polymer filament can be easily formed by dissolving in a solvent, and subsequently precipitating in the presence of water, and that a sol-gel reaction of a silica source in which the aforementioned crystalline polymer filament is employed as a template is also easily carried out. Thereby, a method for simply producing an organic-inorganic hybrid nanofiber can be attained.

That is, the present invention provides an organic-inorganic hybrid nanofiber consisting of a crystalline polymer filament made of a polymer having a straight-chain polyethyleneimine skeleton, and a silica covering the aforementioned crystalline polymer filament, and provides an organic-inorganic hybrid structure composed of the aforementioned organic-inorganic hybrid nanofiber.

In addition, the present invention provides a method for producing an organic-inorganic nanofiber comprising the steps of
(1) obtaining a crystalline polymer filament made of a polymer having a straight-chain polyethyleneimine skeleton by dissolving the polymer having a straight-chain polyethyleneimine skeleton, followed by precipitation in the presence of water, and
(2) covering the aforementioned crystalline polymer filament with a silica by contacting the aforementioned crystalline polymer filament with an alkoxysilane.

### Effects of the Invention

The organic-inorganic hybrid nanofiber of the present invention includes a polymer having a straight-chain polyethyleneimine skeleton which can suitably concentrate metal ions at the center axis of the fiber. For this reason, the organic-inorganic hybrid nanofiber can be usefully employed as a metal-removing filter. In addition, the polyethyleneimine skeleton in the polymer having the straight-chain polyethyleneimine skeleton can be easily cationized. For this reason, various ionic substances can be adsorbed or fixed. In addition, the polymer having the straight-chain polyethyleneimine skeleton can easily make a block or graft with other polymers. For this reason, various functions which originate in the other aforementioned polymer moieties can be provided. As described above, the organic-inorganic hybrid nanofiber of the present invention has a large surface area which the silica has and exhibits superior molecule selectivity, and in addition, can easily provide the various aforementioned functions. For this reason, the organic-inorganic hybrid nanofiber is useful in various fields such as the field of electronic materials, the bioscience field, the field of environmentally responsive products, and the like.

In addition, an outer shape of the organic-inorganic hybrid structure of the present invention can be easily controlled by forming a dispersion in which the crystalline polymer filament as a precursor is dispersed or forming a hydrogel of the crystalline polymer filament into a desirable form, and subsequently carrying out a sol-gel reaction by addition of a silica source. In the organic-inorganic hybrid structure, a secondary structure having a micrometer to millimeter size dimension is present, and in the aforementioned secondary structure, the organic-inorganic hybrid nanofiber having a diameter in nanometers is present. Therefore, in accordance with the present invention, the structure of the hybrid can be controlled from the organic-inorganic hybrid nanofiber having a diameter of nanometer size to an organic-inorganic hybrid structure having a micrometer or millimeter size dimension or greater.

The organic-inorganic hybrid nanofiber of the present invention can be easily produced by covering the aforementioned crystalline polymer filament with a silica having a specified thickness by means of a sol-gel reaction of a silica source which proceeds only on the surface of the crystalline polymer filament having a diameter of nanometer size. In accordance with the aforementioned production method, the organic-inorganic hybrid nanofiber can be obtained in a shorter reaction period than the reaction period in conventional methods.

In addition, the crystalline polymer filament in the organic-inorganic hybrid nanofiber of the present invention can be easily removed by sintering. For this reason, the present invention can be applied to production of a silica nanotube containing a tubular space.

### BRIEF DESCRIPTION OF THE DRAWINGS

Fig. 1 is a micrograph of scanning electron microscope of an organic-inorganic hybrid structure in an aggregate form of a lettuce in Example 1 of the present invention.
Fig. 2 is a micrograph of transmission electron microscope of a crystalline polymer filament covered with a silica in the organic-inorganic hybrid structure in Example 1 of the present invention.
Fig. 3 is a micrograph of scanning electron microscope of an organic-inorganic hybrid structure in an aggregate form of a lettuce in Example 2 of the present invention.
Fig. 4 is a micrograph of scanning electron microscope of an organic-inorganic hybrid structure in an aggregate form of a lettuce in Example 2 of the present invention.
Fig. 5 is a micrograph of scanning electron microscope of an organic-inorganic hybrid structure in an aggregate form of an aster in Example 3 of the present invention.
Fig. 6 is a micrograph of scanning electron microscope of an organic-inorganic hybrid structure in an aggregate form of a fiber in Example 4 of the present invention.
Fig. 7 is a micrograph of scanning electron microscope of an organic-inorganic hybrid structure in an aggregate form of a cactus in Example 5 of the present invention.
Fig. 8 is a micrograph of scanning electron microscope of an organic-inorganic hybrid structure obtained from a system including acetone in Example 6 of the present invention.
Fig. 9 is a micrograph of scanning electron microscope of an organic-inorganic hybrid structure obtained from a system including DMF in Example 6 of the present invention.
Fig. 10 is a micrograph of scanning electron microscope of an organic-inorganic hybrid structure obtained from a system including ethanol in Example 6 of the present invention.
Fig. 11 is a micrograph of scanning electron microscope of an organic-inorganic hybrid structure obtained from a system crosslinked by a chemical bond in Example 7 of the present invention.
Fig. 12 is a micrograph of scanning electron microscope of a plate surface of an organic-inorganic hybrid structure obtained from a system crosslinked by a chemical bond in Example 7 of the present invention.

### BEST MODES FOR CARRYING OUT THE INVENTION

The organic-inorganic hybrid nanofiber of the present invention is formed from a crystalline polymer filament made of a polymer having a straight-chain polyethyleneimine skeleton, and a silica (silicon oxide) covering the aforementioned crystalline polymer filament.

### Polymer Having a Straight-chain Polyethyleneimine Skeleton

The straight-chain polyethyleneimine skeleton referred in the present invention means a strain-chain polymer skeleton having an ethyleneimine unit of a secondary amine as a main structural unit. In the aforementioned skeleton, structural units other than the ethyleneimine unit may be present, but it is preferable that the polymer chain in a specified chain length consist of a continuous ethyleneimine unit in order to form a crystalline polymer filament. The length of the aforementioned straight-chain polyethyleneimine skeleton is not particularly limited as long as the polymer having the aforementioned skeleton can form a crystalline polymer filament. In order to suitably form a crystalline polymer filament, the number of the repeating units of the ethyleneimine units in the aforementioned skeleton moiety is preferably 10 or more, and is preferably in the range of 20 to 10,000.

The polymer employed in the present invention may have the aforementioned straight-chain polyethyleneimine skeleton in the structure thereof, and may be in the form of a line, a star, or a comb, if it is possible to provide a crystalline polymer filament in the presence of water.

In addition, the polymer in the form of a line, a star, or a comb may consist of only the straight-chain polyethyleneimine skeleton, or may be formed from a block copolymer between a block composed of a straight-chain polyethyleneimine skeleton (hereinafter, referred to as "polyethyleneimine block") and other polymer blocks. As other polymer blocks, for example, a water-soluble polymer block such as polyethylene glycol, polypropionyl ethyleneimine, or polyacrylamide, or a hydrophobic polymer block such as polystyrene, a polyoxazoline such as polyphenyl oxazoline, polyoctyl oxazoline, or polydodecyl oxazoline, or a polyacrylate such as a polymethyl methacrylate, or polybutyl methacrylate can be employed. By forming a block copolymer with the other aforementioned polymer blocks, forms or properties of the crystalline polymer filaments can be adjusted.

When the polymer having the straight-chain polyethyleneimine skeleton has other polymer blocks and the like, the ratio of the straight-chain polyethyleneimine skeleton in the aforementioned polymer is not particularly limited as long as a crystalline polymer filament can be formed. In order to suitably form the crystalline polymer filament, the ratio of the straight-chain polyethyleneimine skeleton in the polymer is preferably not less than 25% by mol, and is more preferably not less than 40% by mol, and is further preferably not less than 50% by mol.

The aforementioned polymer having the straight-chain polyethyleneimine skeleton can be easily produced by hydrolyzing a polymer having a straight-chain skeleton formed from a polyoxazoline which is a precursor thereof (hereinafter, referred to as a precursor polymer) under an acidic condition or an alkaline condition. Therefore, the form of the polymer having the straight-chain polyethyleneimine skeleton, such as a line, a star, or a comb can be easily designed by controlling the form of the precursor polymer. In addition, a degree of polymerization and a terminal structure can be easily adjusted by controlling a degree of polymerization of the precursor polymer and terminal functional groups thereof. In addition, in the case of forming the block copolymer having the straight-chain polyethyleneimine skeleton, the block copolymer can be produced by employing the precursor polymer as a block copolymer, and selectively hydrolyzing the straight-chain skeleton formed from the polyoxazoline in the aforementioned precursor.

The precursor polymer can be synthesized by means of a synthesis method such as a cation type polymerization method or a macromonomer method with a monomer such as an oxazoline. By appropriately selecting a synthesis method or an initiator, the precursors in any form of a line, a star, or a comb can be synthesized.

As a monomer forming a straight-chain skeleton formed from a polyoxazoline, an oxazoline monomer such as methyloxazoline, ethyloxazoline, methylvinyloxazoline, phenyloxazoline, or the like, can be employed.

As a polymerization initiator, a compound having a functional group such as an alkyl chloride group, an alkyl bromide group, an alkyl iodide group, a toluenesulfonyloxy group, or a trifluoromethylsulfonyloxy group can be employed. The polymerization initiators can be obtained by converting the hydroxyl groups in various alcohol compounds into other functional groups. In particular, as the functional group conversion, bromination, iodination, toluenesulfonation, or trifluoromethylsulfonation is preferable since the efficacy of the polymerization initiation is increased. In particular, alkyl bromide and alkyl toluenesulfonate are preferable.

In addition, as the polymerization initiator, a product in which the terminal hydroxyl group of a polyethylene glycol is substituted with a bromide or an iodide, or alternatively with a toluenesulfonyl group can also be employed. In this case, a degree of polymerization of the polyethylene glycol preferably ranges from 5 to 100, and in particular, preferably ranges from 10 to 50.

In addition, a pigment having a functional group having an ability of initiating a cation ring-opening living polymerization, and having any one of skeletons of a porphyrin skeleton, a phthalocyanine skeleton, and a pyrene skeleton, which has electron transfer functions, energy transfer functions, or luminescence functions caused by light, can provide specific functions to the obtained polymer.

The linear precursor polymer can be obtained by polymerizing the aforementioned oxazoline monomer with a polymerization initiator having a monovalent or divalent functional group. As examples of the polymerization initiators, mention may be made of, for example, a monovalent initiator such as methylbenzene chloride, methylbenzene bromide, methylbenzene iodide, methylbenzene toluenesulfonate, methylbenzene trifluoromethylsulfonate, methane bromide, methane iodide, methane toluenesulfonate or toluenesulfonic anhydride, trifluoromethylsulfonic anhydride, 5-(4-bromomethylphenyl)-10,15,20-tri(phenyl)porphyrin, or bromomethylpyrene, or a divalent initiator such as dibromomethylbenzene, methylbenzene diiodide, dibromomethylbiphenylene, or dibromomethylazobenzene. In addition, a linear polyoxazoline such as poly(methyloxazoline), poly(ethyloxazoline), or poly(methylvinyloxazoline), which is industrially used can be employed, as it is, as a precursor polymer.

The precursor polymer in the form of a star can be obtained by polymerizing the oxazoline monomer as described above with a polymerization initiator having a functional group with not less than 3 valences. As examples of the polymerization initiator having not less than 3 valences, mention may be made of, for example, a trivalent polymerization initiator such as tribromomethylbenzene, a tetravalent polymerization initiator such as tetrabromomethylbenzene, tetra(4-chloromethylphenyl)porphyrin, or tetrabromoethoxy-phthalocyanine, or a polymerization initiator having 5 or more valances such as hexabromomethylbenzene, tetra(3,5-ditosylylethyloxyphenyl)porphyrin, or the like.

In order to obtain a precursor polymer in the form of a comb, the oxazoline monomer can be polymerized with a linear polymer having a polyvalent polymerization initiating group, from the aforementioned polymerization initiating group. For example, the hydroxyl group of the polymer having a hydroxyl group at the side chain, such as a conventional epoxy resin or polyvinyl alcohol is halogenated with bromine, iodine, or the like, or alternatively is converted into a toluenesulfonyl group. Subsequently, the aforementioned converted moiety can also be employed as a polymerization initiating group.

In addition, as a method for obtaining a precursor polymer in the form of a comb, a polyamine type polymerization stopper can also be employed. For example, an oxazoline is polymerized with a monovalent polymerization initiator, and the terminal of the obtained polyoxazoline is bonded to an amino group of a polyamine such as polyethyleneimine, polyvinylamine, polypropylamine, or the like. Thereby, the polyoxazoline in the form of a comb can be obtained.

Hydrolysis of the straight-chain skeleton formed from the polyoxazoline of the precursor polymer obtained above may be carried out under an acidic condition or under an alkaline condition.

In the hydrolysis under the acidic condition, for example, a hydrochloride salt of the polyethyleneimine can be obtained by stirring the polyoxazoline in an aqueous solution of hydrochloric acid while heating. The obtained hydrochloride salt is treated with an excess of aqueous ammonia, and thereby, crystalline powders of a basic polyethyleneimine can be obtained. The aqueous solution of hydrochloric acid employed may be a concentrated hydrochloric acid or an aqueous solution at the concentration of approximately 1 mol/L. In order to efficiently carry out hydrolysis, it is preferable that an aqueous solution of hydrochloric acid at a concentration of 5 mol/L be employed. In addition, the reaction temperature is preferably around 80°C.

In the hydrolysis under the alkaline condition, the polyoxazoline can be converted into the polyethyleneimine with, for example, an aqueous solution of sodium hydroxide. After the reaction under the alkaline condition, the reaction mixture is cleansed by means of a dialysis membrane, and thereby, the excess of sodium hydroxide is removed. As a result, crystalline powders of the polyethyleneimine can be obtained. The concentration of sodium hydroxide employed may range from 1 to 10 mol/L, and preferably ranges from 3 to 5 mol/L in order to efficiently carry out the reaction. In addition, the reaction temperature is preferably around 80°C.

The amount of the acid or alkali employed in the hydrolysis under the acidic condition or under the alkaline condition may range from 1 equivalent to 10 equivalents per oxazoline unit in the polymer, and is preferably around three equivalents in order to improve reaction efficacy and simplify after-treatments.

By means of the aforementioned hydrolysis, the straight-chain skeleton composed of the polyoxazoline in the precursor polymer is converted into the straight-chain polyethyleneimine skeleton. Thereby, the polymer having the aforementioned polyethyleneimine skeleton can be obtained.

In addition, in the case of forming a block copolymer between the straight-chain polyethyleneimine block and another polymer block, the block copolymer formed from the straight-chain polymer block composed of the polyoxazoline and another polymer block is employed as the precursor polymer, and the straight-chain block composed of the polyoxazoline in the aforementioned precursor polymer can be selectively hydrolyzed.

When the other polymer block is a water-soluble polymer block such as poly(N-propionylethyleneimine) or the like, a block copolymer can be formed by utilizing the higher solubility of poly(N-propionylethyleneimine) in an organic solvent than that of poly(N-formylethyleneimine) or poly(N-acetylethyleneimine). In other words, after 2-oxazoline or 2-methyl-2-oxazoline is subjected to a cation ring-opening living polymerization in the presence of the aforementioned polymerization initiating compound, 2-ethyl-2-oxazoline is further polymerized to the obtained living polymer. Thereby, a precursor polymer composed of a poly(N-formylethyleneimine) block or a poly(N-acetylethyleneimine) block and a poly(N-propionylethyleneimine) block is obtained. The aforementioned precursor polymer is dissolved in water, and an organic solvent which is not compatible with water and is for dissolving the poly(N-propionylethyleneimine) block is mixed and stirred with the aforementioned aqueous solution, thus producing an emulsion. By adding an acid or an alkali to the aqueous phase of the aforementioned emulsion, the poly(N-formylethyleneimine) block or the poly(N-acetylethyleneimine) block is preferentially hydrolyzed. Thereby, a block copolymer having the straight-chain polyethyleneimine block and the poly(N-propionylethyleneimine) block can be formed.

When the number of the valence of the polymerization initiating compound employed here is one or two, a straight-chain block copolymer is obtained. When the number of the valence thereof is three or more, a block copolymer in the form of a star can be obtained. In addition, by employing a multiple-stage block copolymer as the precursor polymer, the obtained polymer can also have a multiple-stage block structure.

### Crystalline Polymer Filament

The crystalline polymer filament of the present invention is one in which plural straight-chain polyethyleneimine skeletons in the primary structure of the polymer having the straight-chain polyethyleneimine skeleton are crystallized in the presence of water molecules, and thereby, the polymers are mutually aggregated to fibrously grow. The crystalline polymer filament exhibits properties of crystals in the structure.

The aforementioned crystalline polymer filament is in the form of fibers which have a diameter ranging from approximately 1 to 100 nm, preferably ranging from 2 to 30 nm, and more preferably ranging from 2 to 10 nm, and have a length of not less than 10 times the diameter, and preferably a length of not less than 100 times the diameter (hereinafter, the aforementioned fibrous form may be referred to as a primary form).

A polyethyleneimine which has been widely employed heretofore is a branched polymer obtained by means of ring-opening polymerization of a cyclic ethyleneimine, and in a primary structure thereof, there are a primary amine, a secondary amine, and a tertiary amine. Therefore, the branched polyethyleneimine is water-soluble, but does not have crystallizing properties. For this reason, in order to produce a hydrogel by employing the branched polyethyleneimine, a network structure must be provided by means of covalent bonding with a crosslinker. However, the straight-chain polyethyleneimine which the polymer employed in the present invention has as a skeleton is composed of only a secondary amine, and the aforementioned secondary amine type of straight-chain polyethyleneimine is water-soluble, but capable of crystallizing.

In crystals of the straight-chain polyethyleneimine, it is known that polymer crystal structures greatly vary depending on the number of the crystallization water included in the ethyleneimine unit of the polymer (see Y. Chatani et al., Macromolecules, 1981, vol. 14, pp. 315-321). It is known that in an anhydrous polyethyleneimine, a crystal structure characterized by a double-helical structure prevails, and when two molecules of water are present in the monomer unit, the polymer forms a crystal characterized by a zigzag structure. In fact, the crystal of the straight-chain polyethyleneimine obtained in water is a crystal having two molecules of water per monomer unit, and is insoluble in water at room temperature.

The crystalline polymer filament of the polymer having the straight-chain polyethyleneimine skeleton in the present invention is formed in the same manner as that of the aforementioned case, by occurrence of crystallization of the straight-chain polyethyleneimine skeleton. Even if the polymer is in the form of a line, a star, or a comb, a crystalline polymer filament can be obtained as long as the polymer has the straight-chain polyethyleneimine skeleton as the primary structure.

The presence of the crystalline polymer filament can be confirmed by means of X-ray scattering, and by the peaks assigned by the straight-chain polyethyleneimine skeleton in the crystal hydrogel at approximately 20°, 27°, and 28° of 2θ angle values in a wide-angle X-ray diffractometer (WAXS).

In addition, the melting point of the crystalline polymer filament measured by a differential scanning calorimeter (DSC) depends on the primary structure of the polymer of the polyethyleneimine skeleton. In general, the melting point ranges from 45°C to 90°C.

The crystalline polymer filament can also form a hydrogel having a three-dimensional network structure by virtue of physical bonding between crystalline polymer filaments in the presence of water, and can also form a crosslinked hydrogel having a chemically crosslinked bonding by crosslinking the crystalline polymer filaments with a crosslinker.

In the hydrogel of the crystalline polymer filament, crystalline polymer filaments are mutually aggregated in the presence of water, and form a three-dimensional form having a size ranging from micrometer order to millimeter order (hereinafter, the aforementioned micro three-dimensional form may be referred to as a secondary form). Between the aggregates having the secondary form, the crystalline polymer filaments in the aggregate are further physically aggregated to form a crosslinked structure. As a result, a three-dimensional network structure formed from the crystalline polymer filaments is formed. They are formed in the presence of water, and for this reason, a hydrogel in which water is included in the aforementioned three-dimensional structure is formed. In the case of employing a crosslinker, a chemical crosslinking between the crystalline polymer filaments occurs, and a crosslinked hydrogel can be formed in which the aforementioned three-dimensional network structure is fixed by chemical crosslinking.

The three-dimensional network structure mentioned herein means a network structure formed by a physical crosslinking of nanosize crystalline polymer filaments themselves by virtue of hydrogen bonding of the free ethyleneimine chains present on the surface thereof, which is different from a conventional polymer hydrogel. Therefore, at the temperatures of not lower than the melting point of the crystal, the crystal is dissolved in water, and the three-dimensional network structure is also destructured. However, if the temperature is turned to room temperature, the crystalline polymer filaments grow, and a physical crosslinking due to a hydrogen bonding between the crystals is formed. For this reason, a three-dimensional network structure is again observed.

In the hydrogel, the secondary form formed by the crystalline polymer filaments can be adjusted by geometric forms of the polymer structures, molecular weight thereof, the non-ethyleneimine moieties which can be introduced into the primary structure, conditions of forming crystalline polymer filaments, or the like, and thereby, for example, the secondary form can be controlled into any form of a fiber, a brush, a star, or the like. In addition, the hydrogel can maintain a general outward form (hereinafter, the outward form of the aforementioned hydrogel may be referred to as a tertiary form in some cases), but can be freely deformed by exerting an external force. For this reason, the form thereof can be easily controlled.

The aforementioned crystalline polymer filament can be obtained by utilizing the properties in which a polymer having a straight-chain polyethyleneimine skeleton is insoluble in water at room temperature, and by dissolving the polymer having the straight-chain polyethyleneimine skeleton in a solvent, and subsequently precipitating the filament in the presence of water.

As examples of the method thereof, mention may be made of, for example, a method in which a polymer having a straight-chain polyethyleneimine skeleton is dissolved in water or a mixture of water and a hydrophilic organic solvent (hereinafter, they are referred to as an aqueous medium), and the aforementioned solution is heated, followed by cooling, or a method in which a polymer having a straight-chain polyethyleneimine skeleton is dissolved in a hydrophilic organic solvent, and water is added to the aforementioned solution.

As the solvent for dissolving the polymer having the straight-chain polyethyleneimine skeleton, an aqueous medium or a hydrophilic organic solvent can be preferably employed. As examples of the aforementioned hydrophilic organic solvents, mention may be made of, for example, hydrophilic organic solvents such as methanol, ethanol, tetrahydrofuran, acetone, dimethylacetamide, dimethylsulfoxide, dioxirane, pyrrolidone, and the like.

In order to precipitate crystalline polymer filaments from a solution of the polymer having the straight-chain polyethyleneimine skeleton, the presence of water is essential. For this reason, precipitation occurs in an aqueous medium.

In addition, in the aforementioned method, by adjusting the amount of the polymer having the straight-chain polyethyleneimine skeleton, a hydrogel formed from crystalline polymer filaments can be obtained. For example, the aforementioned hydrogel can be obtained by, first, dispersing the polymer having the straight-chain polyethyleneimine skeleton, in a specified amount, in water, heating the aforementioned dispersion, to form a transparent aqueous solution of the polymer having the polyethyleneimine skeleton, and subsequently cooling the aqueous solution of the heated polymer to room temperature. The aforementioned hydrogel may be deformed by exerting an external force such as a shearing force or the like, and can be deformed into various forms since it has a state such as ice cream which can maintain a general form.

In the aforementioned method, the heating temperature is preferably not higher than 100°C, and more preferably ranges from 90 to 95°C. In addition, the amount of the polymer included in the polymer dispersion is not particularly limited as long as a hydrogel can be obtained. The amount preferably ranges from 0.01 to 20% by weight, and further preferably ranges from 0.1 to 10% by weight in order to obtain a hydrogel having a stable form. As described above, in the present invention, if the polymer having the straight-chain polyethyleneimine skeleton is employed, a hydrogel can be formed even with a very small concentration of the polymer.

By decreasing the temperature of the aqueous solution of the aforementioned polymer to room temperature, the secondary form of the crystalline polymer filament in the obtained hydrogel can be adjusted. As examples of a method for decreasing the temperature, mention may be made of a method in which the aqueous solution of the polymer is maintained for one hour at 80°C, is cooled to 60°C over one hour, is maintained for one hour at the aforementioned temperature, is subsequently cooled to 40°C over one hour, and is cooled naturally to room temperature; a method in which the aforementioned aqueous solution of the polymer is, at once, cooled in ice-cooled water at a freezing point or in a refrigerant liquid of methanol with dry ice or acetone with dry ice at a temperature of not higher than the freezing point, and subsequently, the cooled solution is maintained in a water bath at room temperature; or a method in which the aforementioned aqueous solution of the polymer is cooled to room temperature in a water bath at room temperature or in air at room temperature.

The step of decreasing the temperature of the aqueous solution of the aforementioned polymer strongly effects on aggregation of the crystalline polymer filaments themselves in the obtained hydrogel. For this reason, the secondary form is not the same as that formed by the crystalline polymer filaments in the hydrogel obtained by the different aforementioned method.

In the case of stepwisely decreasing the temperature of the aqueous solution of the aforementioned polymer in a specified concentration, the secondary form formed from the crystalline polymer filaments in the hydrogel can be in the form of a fiber. When the fibers are immediately cooled, and then are returned to room temperature, the morphology can be in the form of a petal. In addition, when the petal-shaped one is again cooled immediately in acetone with dry ice, and is returned to room temperature, the morphology can be in the form of a wave. As described above, the morphology of the secondary form formed by the crystalline polymer filaments in the hydrogel in the present invention can be specified to any form.

The hydrogel obtained as described above is an opaque gel, and in the gel, crystalline polymer filaments formed from the polymer having the polyethyleneimine skeleton are formed. The crystalline polymer filaments themselves are physically crosslinked by hydrogen bonding, and a three-dimensional physical network structure is formed. The crystalline polymer filaments once formed in the hydrogel can maintain a non-soluble state at room temperature, but they can be changed into a sol state by dissociation of the crystalline polymer filaments when they are heated. Therefore, the physical hydrogel of the present invention can be reversibly changed from a sol to a gel or from a gel to a sol by carrying out a heat treatment.

The hydrogel mentioned in the present invention includes at least water in the three-dimensional network structure. A hydrogel including an organic solvent can be obtained by adding a hydrophilic organic solvent during preparation of the aforementioned hydrogel. As examples of the aforementioned hydrophilic organic solvents, mention may be made of, for example, hydrophilic organic solvents such as methanol, ethanol, tetrahydrofuran, acetone, dimethylacetamide, dimethylsulfoxide, dioxirane, pyrrolidone, and the like.

The amount of the organic solvent preferably ranges from 0.1 to 5 times the volume of water, and more preferably ranges from 1 to 3 times the volume of water.

By including the aforementioned hydrophilic organic solvent, the morphology of the crystalline polymer filament can be changed, and crystals having a morphology which is different from that obtained from a simple aqueous system can be provided. For example, even if a branched secondary form which has a fibrous spread in water is exhibited, a ball-shaped secondary form in which fibers are shrunk can be obtained in the case of a specified amount of ethanol during preparation thereof.

By adding another water-soluble polymer during preparation of the hydrogel mentioned in the present invention, a hydrogel including a water-soluble polymer can be obtained. As examples of the aforementioned water-soluble polymer, mention may be made of, for example, polyethylene glycol, polyvinyl alcohol, polyvinylpyrrolidone, polyacrylamide, poly(N-isopropylacrylamide), polyhydroxyethyl acrylate, polymethyloxazoline, polyethyloxazoline, and the like.

The amount of the water-soluble polymer preferably ranges from 0.1 to 5 times the weight of the polymer having the straight-chain polyethyleneimine skeleton, and more preferably ranges from 0.5 to 2 times the weight of the polymer.

Even by including the aforementioned water-soluble polymer, the morphology of the crystalline polymer filaments can be changed, and a secondary form which is different from the morphology obtained in a simple aqueous system can be provided. In addition, it is effective for increasing the viscosity of the hydrogel, and improving stability of the hydrogel.

In addition, by treating the hydrogel obtained by the aforementioned method with a compound including not less than two functional groups which can react with the amino group of the polyethyleneimine, a crosslinked hydrogel in which the surfaces of the crystalline polymer filaments themselves are linked by a chemical bonding in the hydrogel can be obtained.

As the aforementioned compound including not less than two functional groups which can react with the aforementioned amino group at room temperature, an aldehyde crosslinker, an epoxy crosslinker, an acid chloride, an acid anhydride, or an ester crosslinker can be employed. As examples of the aldehyde crosslinker, mention may be made of, for example, malonyl aldehyde, succinyl aldehyde, glutaryl aldehyde, adipoyl aldehyde, phthaloyl aldehyde, isophthaloyl aldehyde, terephthaloyl aldehyde, and the like. In addition, as examples of the epoxy crosslinker, mention may be made of, for example, polyethylene glycol diglycidyl ether, bisphenol A diglycidyl ether, glycidyl chloride, glycidyl bromide, and the like. As examples of the acid chloride, mention may be made of, for example, malonyl chloride, succinyl chloride, glutaryl chloride, adipoyl chloride, phthaloyl chloride, isophthaloyl chloride, terephthaloyl chloride, and the like. In addition, as examples of the acid anhydride, mention may be made of, for example, phthalic anhydride, succinic anhydride, glutaric anhydride, and the like. In addition, as examples of the ester crosslinker, mention may be made of methyl malonate, methyl succinate, methyl glutarate, methyl phthalate, methyl polyethylene glycol carbonate, and the like.

The crosslinking reaction may be carried out by a method in which the obtained hydrogel is immersed in a solution of a crosslinker, or a method in which a solution of a crosslinker is added to the hydrogel. In the crosslinking reaction, the crosslinker permeates into the inside of the hydrogel, together with changes in osmotic pressures in the system, and the crystalline polymer filaments themselves are linked thereto by hydrogen bonding, thus causing a chemical reaction with the nitrogen atom of ethyleneimine.

The crosslinking reaction proceeds due to a reaction with the free ethyleneimine on the surface of the crystalline polymer filaments. In order to avoid an occurrence of the aforementioned reaction at the inside of the crystalline polymer filaments, the reaction is preferably carried out at the temperature of not higher than the melting point of the crystalline polymer filament for forming the hydrogel, and the crosslinking reaction is most preferably carried out at room temperature.

When the crosslinking reaction is carried out at room temperature, the hydrogel is allowed to stand under the condition of mixing with a solution of the crosslinker, and thereby, a crosslinked hydrogel can be obtained. The period of the crosslinking reaction may range from several minutes to several days. In general, the crosslinking suitably proceeds by leaving to stand overnight.

The amount of the crosslinker may range from 0.05 to 20% with respect to moles of the ethyleneimine unit in the polymer having the polyethyleneimine skeleton employed in the formation of the hydrogel, and more preferably ranges from 1 to 10%.

The aforementioned hydrogel can exhibit a gel structure with a variety of morphology since the gelling agent is a crystalline polymer filament. In addition, with a small amount of the crystalline polymer filament, a three-dimensional network structure is suitably formed in water. For this reason, increased water-retaining properties can be exhibited. In addition, the employed polymer having the straight-chain polyethyleneimine skeleton is easily designed in view of the structure and is easily synthesized, and it is easy to prepare a hydrogel. In addition, by crosslinking between the crystalline polymer filaments in the aforementioned hydrogel with a crosslinker, the shape of the hydrogel can be fixed.

### Organic-Inorganic Hybrid Nanofiber, and Organic-Inorganic Hybrid Structure

The organic-inorganic hybrid nanofiber of the present invention comprises the aforementioned crystalline polymer filament and a silica covering the aforementioned crystalline polymer filament. The aforementioned organic-inorganic hybrid nanofiber can be obtained by means of a sol-gel reaction of the silica source on the surface of the crystalline polymer filament.

The organic-inorganic hybrid nanofiber of the present invention has a diameter ranging from 10 to 1,000 nm, and preferably ranging from 15 to 100 nm, and has a length not less than 10 times the diameter, and preferably has a length not less than 100 times the diameter. The organic-inorganic hybrid nanofiber of the present invention having the aforementioned form exhibits an extremely high aspect ratio. For this reason, if it is added to another material, the strength of the material to which the hybrid nanofiber is added can be greatly improved, compared to the case of adding particles. In addition, by assembling or layering of the nanofibers themselves, a form such as a nonwoven fabric or the like can be obtained.

The amount of the silica in the organic-inorganic hybrid nanofiber varies within a specified range, depending on reaction conditions and the like, and can range from 30 to 90% by weight of the total weight of the organic-inorganic hybrid nanofiber. The amount of the silica included increases in accordance with increasing the amount of the polymer employed in the sol-gel reaction. In addition, the amount of the silica increases by increasing the period of the sol-gel reaction.

The organic-inorganic hybrid nanofiber of the present invention is a hybrid in which a crystalline polymer filament of a polymer having a straight-chain polyethyleneimine skeleton is used as a core, and the aforementioned crystalline polymer filament is covered with a silica. Therefore, the organic-inorganic hybrid nanofiber of the present invention can adsorb metal ions by concentrating in a high degree by means of the ethyleneimine unit present in the aforementioned crystalline polymer filament. In addition, the aforementioned ethyleneimine unit can be easily cationized. For this reason, the organic-inorganic hybrid nanofiber of the present invention can adsorb or trap various ionic substances such as anionic biomaterials and the like. In addition, the aforementioned polymer having the straight-chain polyethyleneimine skeleton is easily subjected to making a block or grafting with other polymers, and structure control of the side chain or the terminal structure of the polymer is easily carried out. For this reason, various functions can be provided in the organic-inorganic hybrid nanofiber by making a block with various functional polymers or controlling the terminal structure.

As examples of methods for providing functions, mention may be made of, for example, fixing of a fluorescence substance and the like. For example, by employing a polyethyleneimine in the form of a star based on porphyrin, the residue of porphyrin can be introduced in the organic-inorganic hybrid nanofiber. In addition, by employing a polymer in which a pyrene such as pyrene aldehyde, in a small amount and preferably not more than 10% by mol with respect to the amount of imine, is reacted, as the side chain of the straight-chain polyethyleneimine skeleton, the pyrene residue can be introduced in the organic-inorganic hybrid nanofiber. In addition, by employing a mixture in which a fluorescence dye such as a porphyrin, a phthalocyanine, a pyrene, or the like, having an acidic group such as a carboxylic acid group, or sulfonic acid group, in a small amount and preferably not more than 0.1% by mol with respect to the number of moles of the imine, is mixed with the base of the straight-chain polyethyleneimine skeleton, the fluorescence substance can be introduced in the organic-inorganic hybrid nanofiber.

In addition, the organic-inorganic hybrid nanofiber of the present invention has the advantageous feature in which an organic-inorganic hybrid structure which may exhibit various forms by means of mutual aggregation can be formed. The aforementioned organic-inorganic hybrid structure formed from the organic-inorganic hybrid nanofiber can be produced by contacting the aforementioned organic-inorganic hybrid structure with a silica source under the condition in which the crystalline polymer filament is crosslinked with a crosslinker, under the condition in which the crystalline polymer filament forms a hydrogel, or under the condition in which the aforementioned hydrogel is crosslinked with a crosslinker. Therefore, the aforementioned organic-inorganic hybrid structure has a form originated from the form of the hydrogel of the aforementioned crystalline polymer filament.

The organic-inorganic hybrid structure of the present invention is a structure molded into any outward form by molding the hydrogel formed from the crystalline polymer filament or the crosslinked hydrogel into any tertiary form, and subsequently, covering the crystalline polymer filament in the aforementioned hydrogel with a silica. In addition, in the aforementioned organic-inorganic hybrid structure, the secondary form of the aggregate formed in the aforementioned hydrogel is also reproduced, and for this reason, there is a form which the aggregate of the organic-inorganic hybrid nanofiber forms, and is originated from the secondary form which the crystalline polymer filament forms (hereinafter, referred to as aggregate form).

As described above, the outward form of the organic-inorganic hybrid structure of the present invention can be freely formed since the tertiary form formed from the aforementioned crystalline polymer filament can be fixed. In addition, the aggregate form which the organic-inorganic hybrid structure internally has can be formed into various forms such as a fiber, a brush, a star, a lettuce, a sponge, an aster, a cactus, a dandelion, and the like, by adjusting a geometrical form of the polymer structure of the polymer employed, a molecular weight thereof, the non-ethyleneimine moiety which can be introduced in the primary structure, the amount of the silica source employed, and the like. The size of the aggregate form can range from approximately 3 µm to 1 mm. The form with the aforementioned size is a three-dimensional form formed by the aggregation of the organic-inorganic hybrid nanofiber which is a base unit, and the arrangement in space. In the aforementioned organic-inorganic hybrid nanofiber which is the base unit, a core of the crystalline polymer filament is included. That is, the organic-inorganic hybrid structure of the present invention may have a morphology in which the crystalline polymer filaments themselves are physically linked by means of hydrogen bonding in water, and are arranged in space, to form a three-dimensional template having any form, and a silica is fixed in accordance with the template, and thereby, the organic-inorganic hybrid nanofibers are mutually aggregated in the space.

The organic-inorganic hybrid structure of the present invention is a product in which a physically crosslinked hydrogel obtained by further aggregating the aggregates, themselves, in which crystalline polymer filaments are aggregated, is fixed by a silica. By adjusting the polymer structure employed, the polymer concentration, the amount of the silica source, and the like, the physical crosslink of the aforementioned aggregates themselves is cut during fixing by a silica, and the aggregates of the crystalline polymer filaments or plural assemblies of the aforementioned aggregates are fixed with silicas. Thereby, the aggregate of the organic-inorganic hybrid nanofibers can also be taken out.

The organic-inorganic hybrid nanofiber of the present invention can be produced by means of a production method comprising the steps of
(1) obtaining a crystalline polymer filament of a polymer having a straight-chain polyethyleneimine skeleton by dissolving the polymer having the straight-chain polyethyleneimine skeleton in a solvent, followed by precipitation in the presence of water, and
(2) covering the aforementioned crystalline polymer filament with a silica by contacting the aforementioned crystalline polymer filament with an alkoxysilane.

In the aforementioned step (1), the crystalline polymer filament may be in the state of a hydrogel or in the state of a crosslinked hydrogel.

The organic-inorganic hybrid nanofiber of the present invention can be obtained by contacting the crystalline polymer filament with the silica source in the presence of water, as described in the aforementioned step (2). In addition, the silica source may be contacted under the condition in which the crystalline polymer filament is crosslinked with a crosslinker, under the condition in which the crystalline polymer filament forms a hydrogel, or under the condition in which the aforementioned hydrogel is crosslinked with a crosslinker, and thereby, an organic-inorganic hybrid structure formed from the organic-inorganic hybrid nanofiber can be obtained.

As an example of the method for contacting the crystalline polymer filament with the silica source, mention may be made of a method in which in an aqueous dispersion of the crystalline polymer filament, a hydrogel of the crystalline polymer filament, or a crosslinked hydrogel, a solution in which the silica source is dissolved in a solvent which can be employed in a common sol-gel reaction is added, and a sol-gel reaction is carried out at room temperature. By means of the aforementioned method, the organic-inorganic hybrid nanofiber and the organic-inorganic hybrid structure can be easily produced.

As examples of compounds employed as the silica source, mention may be made of a tetraalkoxysilane, an alkyltrialkoxysilane, and the like.

As examples of tetraalkoxysilanes, mention may be made of, for example, tetramethoxysilane, tetraethoxysilane, tetrapropoxysilane, tetrabutoxysilane, tetra-t-butoxysilane, and the like.

As examples of alkyltrialkoxysilanes, mention may be made of methyltrimethoxysilane, methyltriethoxysilane, ethyltrimethoxysilane, ethyltriethoxysilane, n-propyltrimethoxysilane, n-propyltriethoxysilane, iso-propyltrimethoxysilane, iso-propyltriethoxysilane, 3-chloropropyltrimethoxysilane, 3-chloropropyltriethoxysilane, vinyltrimethoxysilane, vinyltriethoxysilane, 3-glycyloxypropyltrimethoxysilane, 3-glycyloxypropyltriethoxysilane, 3-aminopropyltrimethoxysilane, 3-aminopropyltriethoxysilane, 3-mercaptopropylmethoxysilane, 3-mercaptotriethoxysilane, 3,3,3-trifluoropropyltrimethoxysilane, 3,3,3-trifluoropropyltriethoxysilane, 3-methacryloxypropyltrimethoxysilane, 3-methacryloxypropyltriethoxysilane, phenyltrimethoxysilane, phenyltriethoxysilane, p-chloromethylphenyltrimethoxysilane, p-chloromethylphenyltriethoxysilane, dimethyldimethoxysilane, dimethyldiethoxysilane, diethyldimethoxysilane, diethyldiethoxysilane, and the like.

The aforementioned sol-gel reaction for providing an organic-inorganic hybrid nanofiber proceeds in an aqueous medium such as water, a solvent mixture of water and a hydrophilic organic solvent, or the like, in the presence of the crystalline polymer filament. The reaction does not occur in an aqueous liquid phase, and proceeds on the surface of the crystalline polymer filament. Therefore, the conditions of the hybrid reaction are not limited as long as the crystalline polymer filaments are not dissolved.

In order to make the crystalline polymer filament insoluble, in the sol-gel reaction, water is preferably present in not less than 20%, and is more preferably present in not less than 40%, in an aqueous liquid including the hydrophilic organic solvent.

In the sol-gel reaction, if the amount of the alkoxysilane as a silica source is employed in excess with respect to the ethyleneimine which is the monomer unit of the polyethyleneimine, an organic-inorganic nanofiber can be suitably formed. The degree in excess of the alkoxysilane preferably ranges from 2 to 1000 times equivalence of the ethyleneimine.

In addition, the concentration of the polymer in the aqueous medium during formation of the crystalline polymer filament preferably ranges from 0.1 to 30% based on the amount of the polyethyleneimine included in the polymer. In addition, the concentration of the polyethyleneimine in the aqueous medium may exceed 30% by concentrating under the condition in which the crystal morphology of the crystalline polymer filament is maintained. As the concentration method employed therein, a method in which an aqueous dispersion of the aforementioned crystalline polymer filament and a hydrogel of the crystalline polymer filament are filtered at room temperature under normal pressure or under reduced pressure, can be employed.

The period of the sol-gel reaction may vary from one minute to several days. In the case of employing a methoxysilane exhibiting high reactivity of the alkoxysilane, the reaction period may range from one minute to 24 hours, and in order to improve reaction efficiency, the reaction period is suitably set to range from 30 minutes to 5 hours. In addition, in the case of employing an ethoxysilane, or a butoxysilane exhibiting low reactivity, the period of the sol-gel reaction is preferably not less than 24 hours, and is more preferably about one week.

When an organic-inorganic hybrid is prepared, by adjusting a geometrical form of a polymer structure, a molecular weight thereof, a non-ethyleneimine moiety which can be introduced in a primary structure, a condition of forming an organic-inorganic hybrid structure, and the like, an aggregate form in the organic-inorganic hybrid structure can be adjusted. The aforementioned aggregate form greatly depends on a molecular structure of the polymer employed, a degree of polymerization, a composition, and a method for lowering a temperature during preparation of an organic-inorganic hybrid structure.

For example, an organic-inorganic hybrid structure having a secondary form like a lettuce can be obtained by employing a linear polyethyleneimine having a degree of polymerization of not less than 300 as the polymer having the straight-chain polyethyleneimine skeleton, decreasing the temperature naturally from not less than 80°C to room temperature to obtain a hydrogel, followed by carrying out a sol-gel reaction with the aforementioned hydrogel. The thickness of the leaf part in the aggregate form like a lettuce is increased as a concentration of the polymer in the polymer solution during crystallizing the polymer is decreased. When the concentration is not less than 2%, the thickness of the leaf part is approximately 100 nm. When the concentration is not more than 1%, the thickness of the leaf part is approximately 500 nm.

In addition, in the case of employing a polyethyleneimine in the form of a star, a secondary form obtained can also be controlled by changing a structure of a center residue which forms a nucleus thereof. For example, if the center residue has a large pi plane such as a porphyrin, the secondary form in the organic-inorganic hybrid structure obtained is an aster form, and a size of one crystal in the form of an aster ranges from approximately 2 to 6 µm. If the concentration is not less than 1%, the number of the arms of the aster is small, and the arms tend to band together. If the concentration is below 1%, the number of the arms is large, and the arms tend to independently separate. In addition, if the center residue has a small structure such as a benzene ring, the aggregate form in the organic-inorganic hybrid structure obtained is a fiber form in which many strings are banded together, and the fibers are mutually intertangled to form an organic-inorganic hybrid structure in the overall form of a sponge. The diameter of one fiber form is approximately 150 nm.

In addition, by employing a crosslinked hydrogel in which the crystalline polymer filaments are crosslinked by means of chemical bonds, organic-inorganic hybrid structures in various forms can be obtained. The form and size thereof can be the same as the size and form of a container employed during preparation of the crosslinked hydrogel. For example, the organic-inorganic hybrid structure can be produced in any form such as a disk, a cylinder, a plate, a sphere, or the like. In addition, by cutting or trimming the crosslinked hydrogel, a desired form can also be obtained. The crosslinked hydrogel formed as described above is immersed in a solution of a silica source, and thereby, an organic-inorganic hybrid structure in any form can be easily obtained. The period for immersing in the solution of the silica source varies from one hour to one week, depending on types of the silica source employed. For this reason, it is necessary to appropriately adjust the period. In a solution of a methoxysilane, the period may range from approximately 1 hour to 48 hours. In a solution of an ethoxysilane, the period preferably ranges from approximately 1 day to 7 days.

As described above, the organic-inorganic hybrid nanofiber of the present invention can be easily produced by dissolving a polymer having a straight-chain polyethyleneimine skeleton, precipitating in the presence of water to obtain a crystalline polymer filament, and subsequently contacting the aforementioned crystalline polymer filament with an alkoxysilane in the presence of water. In the aforementioned preparation method, the step of obtaining the crystalline polymer filament and the step for a sol-gel reaction of silica can be carried out in a shorter time. In addition, a dispersion of the crystalline polymer filament and a hydrogel of the crystalline polymer filament can be easily prepared, and by contacting the aforementioned dispersion or hydrogel with the alkoxysilane, the organic-inorganic hybrid structure of the present invention can be easily produced.

As described above, the organic-inorganic hybrid nanofiber of the present invention can have a large surface area which the silica nanofiber possesses, can exhibit superior molecular selectivity and chemical stability which originate from the silica for use in covering, and in addition, can trap or concentrate various substances by virtue of the polymer having the straight-chain polyethyleneimine skeleton included in the nanofiber. Therefore, the organic-inorganic hybrid nanofiber of the present invention can trap or concentrate a metal or a biomaterial in the fibers of nanosize, and for this reason, is a useful material in various fields such as the field of electronic materials, the bioscience field, the field of environmentally responsive products, and the like.

The organic-inorganic hybrid structure of the present invention is a product in which the organic-inorganic hybrid nanofibers having a diameter of nanosize are mutually aggregated by fixing a silica in accordance with a template which is physically linked and is obtained by further aggregating a secondary form which crystalline polymer filaments form in the presence of water to form a crosslinked structure. Therefore, in the aforementioned organic-inorganic hybrid structure, a three-dimensional network structure is formed in which the organic-inorganic hybrid nanofibers are assembled in a high degree in the state of maintaining the aforementioned properties of the organic-inorganic hybrid nanofiber. The outward form of the organic-inorganic hybrid structure can be freely formed in a size of not less than one millimeter. The aforementioned organic-inorganic hybrid structure internally has the three-dimensional network structure, and for this reason, the hybrid structure can be usefully employed as a high-function filter such as a biofilter, an air filter, or the like, and as a catalyst having a high specific surface area by trapping a metal in the fiber structure. In addition, in the aforementioned organic-inorganic hybrid structure, it is easy to control the outward form structure, and various fine secondary forms can be obtained in the structure. For this reason, the hybrid structure is a promising material as a high-function material in various fields, in addition to the aforementioned uses.

Therefore, the organic-inorganic hybrid nanofibers and the organic-inorganic hybrid structures of the present invention are novel hybrids which completely overcome the difficulty of controlling the forms during preparation of conventional silica materials, and can be easily produced. For this reason, application thereof is greatly expected regardless of fields or categories of industry. In addition, in the organic-inorganic hybrid nanofibers and the organic-inorganic hybrid structures of the present invention, the crystalline polymer filaments made of the polymer having the straight-chain polyethyleneimine skeleton are internally included. For this reason, they are useful materials in the field in which a polyethyleneimine is applied, in addition to the field in which silica materials are applied.

### EXAMPLES

In the following, the present invention is described in detail with reference to Examples and Reference Examples. It should be understood that the present invention is not limited to these examples. "%" means "% by weight", unless otherwise indicated.

### Analysis by means of X-ray diffractometry

A sample which had been isolated and dried was mounted on a holder for measuring samples, and the holder was set on a wide-angle X-ray diffractometer "Rint-Ultma" manufactured by Rigaku Corporation. Measurement was carried out under the conditions of Cu/Kα ray, 40 kV/30 mA, scanning speed of 1.0°/min, and scanning range of 10 to 40°.

### Analysis by means of differential scanning calorimetry

A sample which had been isolated and dried was weighed by means of a measure patch, and was set on a differential scanning calorimeter "DSC-7" manufactured by Perkin Elmer Co., Ltd. Measurement was carried out at a rate of increasing temperature of 10°C/min in a temperature range of from 20°C to 90°C.

### Morphological analysis by means of scanning electron microscopy

A sample which had been isolated and dried was mounted on a glass slide, and was then observed by means of a surface observing equipment "VE-7800" manufactured by Keyence Corporation.

### Observation by means of transmission electron microscopy

A sample which had been isolated and dried was mounted on a carbon-deposited copper grid, and was observed by means of a high-resolution electron microscope EM-002B, VOYAGER M 3055, manufactured by Topcon Noran Instruments Co., Ltd.

### Synthesis Example 1

### Synthesis of linear polyethyleneimine (L-PEI)

A commercially available polyethyloxazoline (number average molecular weight = 500,000, mean degree of polymerization = 5,000, manufactured by Aldrich Corp.), in an amount of 5 g, was dissolved in 20 mL of a 5 M aqueous solution of hydrochloric acid. The solution was heated to 90°C in an oil bath, and was stirred for 10 hours at the same temperature. Acetone, in an amount of 50 mL, was added to the reaction mixture to completely precipitate a polymer. The polymer was filtered, and washed with methanol three times. As a result, a white powder of polyethyleneimine was obtained. The obtained powder was identified by means of ¹H-NMR (deuterated water). As a result, it was confirmed that the peaks at 1.2 ppm (CH₃) and 2.3 ppm (CH₂) assigned to the ethyl group of the side chain of the polyethyloxazoline completely disappeared. In other words, this result indicated that the polyethyloxazoline was completely hydrolyzed and was converted into a polyethyleneimine.

The powder was dissolved in 5 mL of distilled water, and 50 mL of 15% aqueous ammonia was added dropwise to the aforementioned solution while being stirred. The mixture was allowed to stand overnight. Subsequently, precipitated powder was filtered, and the powder was washed with cooled water three times. The washed powder was dried in a desiccator at room temperature, and thereby, a liner polyethyleneimine (L-PEI) was obtained. The yield was 4.2 g (including crystallization water). In the polyethyleneimine obtained by hydrolyzing the polyoxazoline, only the side chain thereof was reacted, and the main chain was not changed. Therefore, a degree of polymerization of the L-PEI was 5,000, and was the same as that before hydrolysis.

### Synthesis Example 2

### Synthesis of linear polyethyleneimine (L-PEI-2)

A commercially available polyethyloxazoline (number average molecular weight = 50,000, mean degree of polymerization = 500, manufactured by Aldrich Corp.), in an amount of 30 g, was dissolved in 125 mL of a 5 M aqueous solution of hydrochloric acid. The solution was heated to 100°C in an oil bath, and was stirred for 12 hours at the same temperature. Acetone, in an amount of 150 mL, was added to the reaction mixture, and a polymer was completely precipitated. The precipitated polymer was filtered, and washed with acetone three times. As a result, a white powder of a hydrochloride salt of a polyethyleneimine was obtained. The obtained powder was identified by means of ¹H-NMR (deuterated water). As a result, it was confirmed that the peaks at 1.2 ppm (CH₃) and 2.3 ppm (CH₂) assigned to the ethyl group of the side chain of the polyethyloxazoline completely disappeared. In other words, this result indicated that the polyethyloxazoline was completely hydrolyzed and was converted into a hydrochloride salt of a polyethyleneimine.

The powder was dissolved in 250 mL of distilled water. A 10% aqueous solution of NaOH, in an amount of 120 mL, was added dropwise to the solution. Immediately, a white powder was produced. After the mixture was allowed to stand for a while, the precipitated powder was filtered, and washed with cooled water three times, and with acetone once. The washed powder was dried in a desiccator at 40°C. Thereby, a linear polyethyleneimine (L-PEI-2) was obtained in an amount of 14.4 g (including crystallization water). In the polyethyleneimine obtained by hydrolyzing the polyoxazoline, only the side chain thereof was reacted, and the main chain was not changed. Therefore, a degree of polymerization of the L-PEI was 500, and was the same as that before hydrolysis.

### Synthesis Example 3

### Synthesis of polyethyleneimine having porphyrin as a center in the form of a star (P-PEI)

In accordance with a method described in Jin et al., J. Porphyrin & Phthalocyanine, 3, 60 - 64 (1999); and Jin, Macromol. Chem. Phys., 204, 403-409 (2003), a polymethyloxazoline having a center of porphyrin in the form of a star as a precursor polymer was synthesized as described below.

The inside of a two-neck flask with a volume of 50 mL equipped with a three-way tap was displaced with an argon gas. Subsequently, 0.0352 g of tetra(p-iodomethylphenyl)porphyrin (TIMPP), and 8.0 mL of N,N-dimethylacetamide were added thereto. The mixture was stirred at room temperature, and TIMPP was completely dissolved. To the solution, 2-methyl-2-oxazoline, in an amount of 3.4 mL (3.27 g), corresponding to 1280 times mole of the porphyrin was added. Subsequently, the temperature of the reaction mixture was increased to 100°C, and was stirred for 24 hours. The reaction mixture was cooled to room temperature, and 10 mL of methanol was then added thereto. Subsequently, the mixture was concentrated under reduced pressure. The residue was dissolved in 15 mL of methanol, and the solution was poured into 100 mL of tetrahydrofuran. Thereby, a polymer was precipitated. In the same manner as described above, the polymer was again precipitated, and was subjected to suction filtration. Subsequently, the polymer obtained was placed in a desiccator with P₂O₅, and was subjected to suction drying for one hour by means of an aspirator. In addition, the polymer was dried for 24 hours under vacuum by means of a vacuum pump, thus producing a precursor polymer (TPMO-P). Yield was 3.05 g (92.3%).

The number average molecular weight of the precursor polymer (TPMO-P) obtained, which was measured by means of GPC, was 28,000, and a molecular weight distribution was 1.56. In addition, an integral ratio of the ethylene proton at the polymer arm and the pyrrole cyclic proton of porphyrin at the center of the polymer was calculated. As a result, an average degree of polymerization of each of the arms was 290. Therefore, the number average molecular weight based on ¹H-NMR was assumed as 99,900. Greatly surpassing of the value of the number average molecular weight based on ¹H-NMR with respect to the value of the number average molecular weight based on GPC is consistent with a general characteristic in a polymer in the form of a star.

Employing the aforementioned precursor polymer, the polymethyloxazoline was hydrolyzed in the same manner as that of the aforementioned Synthesis Example 1. Thereby, a polyethyleneimine (P-PEI) in the form of a star was obtained in which four polyethyleneimines were linked to the porphyrin as a center. As a result of measurement by ¹H-NMR (TMS = external standard, in deuterated water), the peak at 1.98 ppm assigned by the methyl side chain of the precursor polymer before hydrolysis completely disappeared.

### Synthesis Example 4

### Synthesis of polyethyleneimine having a benzene ring as a center in the form of a star (B-PEI)

In accordance with the method described in Jin, J. Mater. Chem., 13, 672 - 675 (2003), a polymethyloxazoline in the form of a star in which 6 arms of the polymethyloxazoline were linked as a center of a benzene ring which was a precursor polymer was synthesized as described below.

In a test tube having a joint inlet formed by ground glass, to which a magnetic stirrer was set, 0.021 g (0.033 mmol) of hexakis(bromomethyl)benzene as a polymerization initiator was placed, and a three-way tap was set to the inlet of the test tube. Subsequently, in the test tube, the condition was set under vacuum, and then replacement with a nitrogen gas was carried out. Under a stream of a nitrogen gas, 2.0 mL (24 mmol) of 2-methyl-2-oxazoline, and 4.0 mL of N,N-dimethylacetamide were successively added by means of a syringe from the inlet of the three-way tap. The test tube was heated to 60°C in an oil bath, and was maintained as it was for 30 minutes. As a result, the mixture was transparent. The transparent mixture was further heated to 100°C, and was stirred for 20 hours at the same temperature, thus obtaining a precursor polymer. From ¹H-NMR measurement of the mixture, a conversion ratio of the monomer was 98%. As a result of estimating an average degree of polymerization of the polymer based on the aforementioned conversion ratio, an average degree of polymerization of each of the arms was 115. In addition, in measurement of the molecular weight by means of GPC, a weight average molecular weight of the polymer was 22,700, and a molecular weight distribution was 1.6.

Employing the aforementioned precursor polymer, a polymethyloxazoline was hydrolyzed in the same manner as that of the aforementioned Synthesis Example 1. Thereby, a polyethyleneimine B-PEI in the form of a star in which 6 polyethyleneimines were linked to the benzene ring core was obtained. As a result of measurement by means of ¹H-NMR (TMS = external standard, in deuterated water), the peak at 1.98 ppm assigned as the methyl side chain of the precursor polymer before hydrolysis completely disappeared.

The obtained polymethyloxazoline in the form of a star was hydrolyzed in the same manner as that of the aforementioned Synthesis Example 1. Thereby, a polyethyleneimine (B-PEI) in the form of a star in which 6 polyethyleneimines were linked to the benzene ring core was obtained.

### Synthesis Example 5

### Synthesis of block copolymer PEG-b-PEI

A polymer in which tosylate was bonded to one terminal of a polyethylene glycol having a number average molecular weight of 4,000 was employed as a polymerization initiator (PEG-I), and a block copolymer between a polyethylene glycol as a precursor block polymer and a polyoxazoline was obtained as described below.

In a test tube having a joint inlet formed by ground glass, to which a magnetic stirrer was set, 1.5 g (0.033 mmol) of PEG-I as a polymerization initiator was placed, and a three-way tap was set to the inlet of the test tube. Subsequently, in the test tube, the condition was set under vacuum, and then replacement with a nitrogen gas was carried out. Under a stream of a nitrogen gas, 6.0 mL (72 mmol) of 2-methyl-2-oxazoline, and 20.0 mL of N,N-dimethylacetamide were successively added by means of a syringe from the inlet of the three-way tap. The test tube was heated to 100°C in an oil bath, and was stirred for 24 hours at the same temperature. Thereby, a precursor block polymer was obtained. From ¹H-NMR measurement of the obtained mixture, it could be seen that a conversion ratio of the monomer was 100%.

Yield of the precursor block polymer after purification was 93%. In addition, in the ¹H-NMR measurement, each of integral ratios was obtained on the basis of the tosyl group present at the terminal of the polymer. The degree of polymerization of PEG was 45, and the degree of polymerization of polyoxazoline was 93. In other words, an average degree of polymerization of the block polymer was 138. In addition, in measurement of a molecular weight by means of GPC, the number average molecular weight of the polymer was 12,000, and the molecular weight distribution was 1.27.

Employing the aforementioned precursor block polymer, a polyoxazoline was hydrolyzed in the same manner as that of the aforementioned Synthesis Example 1. Thereby, a block copolymer (PEG-b-PEI) in which polyethyleneimine was bonded to PEG was obtained. As a result of measurement by means of ¹H-NMR (TMS = external standard, in deuterated water), the peak at 1.98 ppm assigned as the methyl of the side chain of the precursor polymer before hydrolysis completely disappeared.

### Example 1

### Organic-inorganic hybrid structure from a linear polyethyleneimine system

A specified amount of the L-PEI powder obtained in Synthesis Example 1 was weighed, and dispersed in distilled water to prepare an L-PEI dispersion having each of various concentrations shown in Table 1. The dispersions were heated to 90°C in an oil bath, and thereby, completely transparent aqueous solutions having different concentrations were obtained. The aqueous solutions were allowed to stand at room temperature to cool naturally to room temperature. Thereby, opaque L-PEI hydrogels (11) to (15) were obtained. In the obtained hydrogels, deformation occurred by exerting a shearing force, but a general form thereof could be maintained. They were hydrogels in the form of ice cream.

As a result of an X-ray diffraction measurement for the obtained hydrogel (15), it was confirmed that at 20.7°, 27.6°, and 28.4°, scattering intensity peaks were observed. In addition, as a result of measurement of changes in endothermic conditions by means of a calorimetric analyzer, it was confirmed that an endothermic peak was observed at 64.7°C. From the measurement results, the presence of crystals of L-PEI in the hydrogel was confirmed.

**Table 1: Organic-inorganic hybrid structures obtained with various L-PEI concentrations**

| No. | 11 | 12 | 13 | 14 | 15 |
|---|---|---|---|---|---|
| L-PEI concentration (%) | 0.25 | 0.5 | 1.0 | 2.0 | 3.0 |
| TMSO/EtOH (1/1) mL | 1 | 1 | 2 | 2 | 2 |

To 1 mL of the hydrogel obtained above, 1 mL or 2 mL of a mixture of tetramethoxysilane (TMSO) and ethanol in 1/1 (volume ratio) was added as shown in Table 1, and the mixture in the form of ice cream was lightly stirred for one minute. Subsequently, the mixture was allowed to stand for 40 minutes as it was. Subsequently, the mixture was washed with an excess of acetone, and then was cleaned three times by means of a centrifuge. The obtained solid was recovered and dried at room temperature, thus obtaining each of organic-inorganic hybrid structures 11 to 15. From an X-ray diffraction measurement for the organic-inorganic hybrid structure 14, at 20.5°, 27.2°, and 28.2°, scattering intensity peaks were observed.

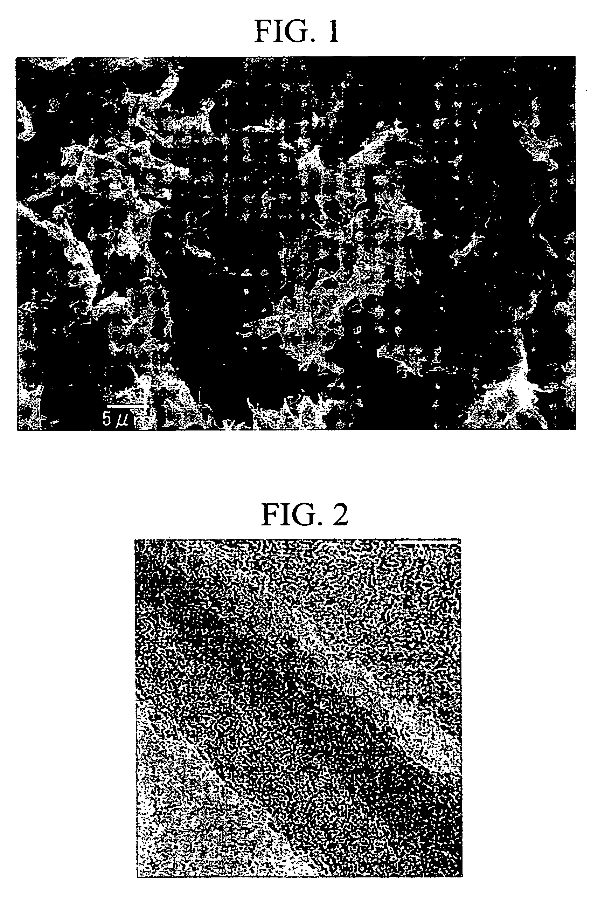

As a result of observation of the obtained organic-inorganic hybrid structure by means of a scanning electron microscope, in each of organic-inorganic hybrid structures 11 to 15, an aggregate form in the form of a lettuce was confirmed. A scanning electron micrograph of the obtained organic-inorganic hybrid structure 14 is shown in Fig. 1.

In addition, as a result of observation of the aforementioned organic-inorganic hybrid structure 14 by means of a transmission electron microscope, it was confirmed that a silica covered over the surface of the crystalline polymer filament having a diameter of approximately 5 nm, as shown in Fig. 2.

### Example 2

### Organic-inorganic hybrid structure 2 from a linear polyethyleneimine system

The powder of L-PEI-2 obtained in Synthesis Example 2, in an amount of 1.25 g (including 20% of crystallization water), was weighed and dispersed in 200 mL of distilled water to prepare a dispersion of L-PEI-2. The dispersion was heated to 90°C in an oil bath, and thereby, a completely transparent aqueous solution was obtained. The aqueous solution was cooled in an ice-cooled bath, and thereby, an opaque solution was obtained. Subsequently, the opaque solution was allowed to stand for 3 hours at room temperature, and thereby, a hydrogel of 0.5% of L-PEI-2 was obtained. The obtained hydrogel was filtered under reduced pressure to remove water, thus obtaining a hydrogel (21) with a concentration of approximately 15% of L-PEI-2.

As a result of an X-ray diffraction measurement for the obtained hydrogel of L-PEI-2 (21), it was confirmed that at 20.7°, 27.6°, and 28.4°, scattering intensity peaks were observed. In addition, as a result of measurement of changes in endothermic conditions by means of a calorimetric analyzer, it was confirmed that an endothermic peak was observed at 64.7°C. From the measurement results, the presence of crystals of L-PEI-2 in the hydrogel was confirmed.

To the hydrogel (21) with 15% of L-PEI-2 obtained above, 70 mL of a mixture of tetramethoxysilane (TMSO) and ethanol in 1/1 (volume ratio) was added, and the mixture in the form of ice cream was lightly stirred. Subsequently, the mixture was allowed to stand for 40 minutes as it was. Subsequently, the mixture was washed with ethanol several times. The obtained solid was recovered and dried at 40°C, thus obtaining an organic-inorganic hybrid structure 21. From an X-ray diffraction measurement for the organic-inorganic hybrid structure 21, at 20.5°, 27.2°, and 28.2°, scattering intensity peaks were observed.

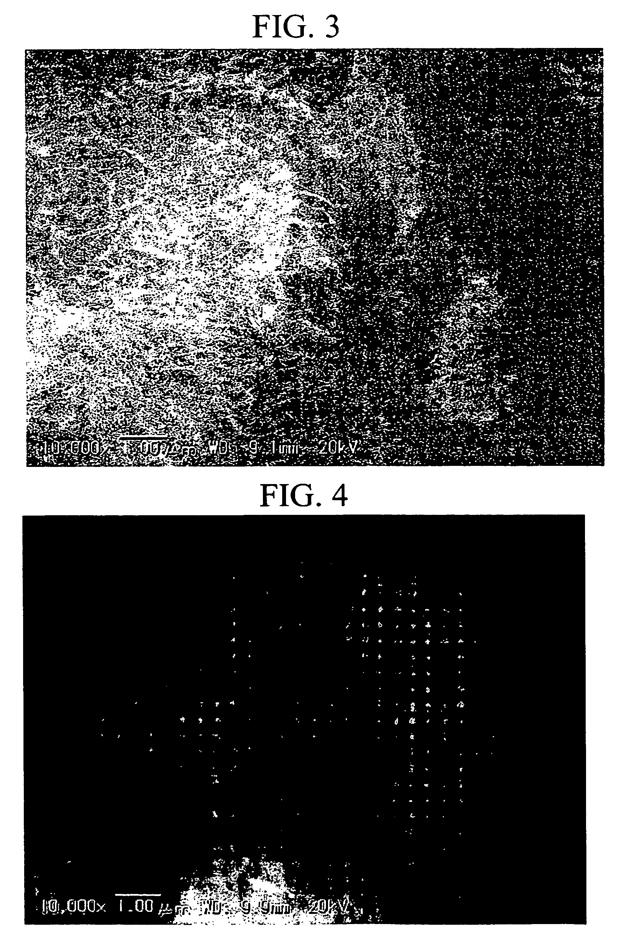

As a result of observation of the obtained organic-inorganic hybrid structure 21 by means of a scanning electron microscope, in the organic-inorganic hybrid structure 21, an aggregate form in the form of a lettuce was confirmed. A scanning electron micrograph of the obtained organic-inorganic hybrid structure 21 is shown in Fig. 3.

The hydrogel (21) with L-PEI-2 obtained above was further dried at 40°C under reduced pressure in a vacuum desiccator, and thereby, a hydrogel (22) with approximately 30% of L-PEI-2 was obtained. To an aqueous dispersion of the hydrogel (22) with 30% of L-PEI-2, 70 mL of a mixture of tetramethoxysilane (TMSO) and ethanol in 1/1 (volume ratio) was added, and the mixture in the form of ice cream was lightly stirred. Subsequently, the mixture was allowed to stand for two hours as it was. Subsequently, the mixture was washed with ethanol several times. The obtained solid was recovered and dried at 40°C under reduced pressure, thus obtaining an organic-inorganic hybrid structure 22.

As a result of observation of the obtained organic-inorganic hybrid structure 22 by means of a scanning electron microscope, in the organic-inorganic hybrid structure 22, an aggregate form in the form of a lettuce was confirmed. A scanning electron micrograph of the obtained organic-inorganic hybrid structure 22 is shown in Fig. 4.

### Example 3

Organic-inorganic hybrid structure employing a polyethyleneimine including a porphyrin in the form of a star

P-PEI hydrogels (31) to (35) having concentrations shown in Table 2 were obtained in the same manner as that of Example 1, employing P-PEI synthesized in Synthesis Example 3 instead of employing the L-PEI powder in Example 1. In the obtained hydrogels, deformation occurred by exerting a shearing force, but a general shape could be maintained. The hydrogels were in the form of ice cream.

As a result of an X-ray diffraction measurement for the obtained hydrogel (35), it was confirmed that at 20.4°, 27.3°, and 28.1°, scattering intensity peaks were observed. In addition, as a result of measurement of changes in endothermic conditions by means of a calorimetric analyzer, it was confirmed that an endothermic peak was observed at 64.1°C. From the measurement results, the presence of crystals of P-PEI in the hydrogel was confirmed.

**Table 2: Organic-inorganic hybrid structures obtained from various P-PEI concentrations**

| No. | 31 | 32 | 33 | 34 | 35 |
|---|---|---|---|---|---|
| P-PEI concentration (%) | 0.25 | 0.5 | 1.0 | 2.0 | 3.0 |
| TMSO/EtOH (1/1) mL | 1 | 1 | 2 | 2 | 2 |

To 1 mL of the hydrogel obtained above, 1 mL or 2 mL of a mixture of tetramethoxysilane (TMSO) and ethanol in 1/1 (volume ratio) was added, and the mixture in the form of ice cream was lightly stirred for one minute. Subsequently, the mixture was allowed to stand for 40 minutes as it was. Subsequently, the mixture was washed with an excess of acetone, and was cleaned by means of a centrifuge three times. The obtained solid was recovered and dried at room temperature, thus obtaining organic-inorganic hybrid structures 31 to 35. As a result of an X-ray diffraction measurement for the obtained hydrogel structure 34, it was confirmed that at 20.5°, 27.4°, and 28.1°, the same scattering intensity peaks as those before covering with the silica were observed.

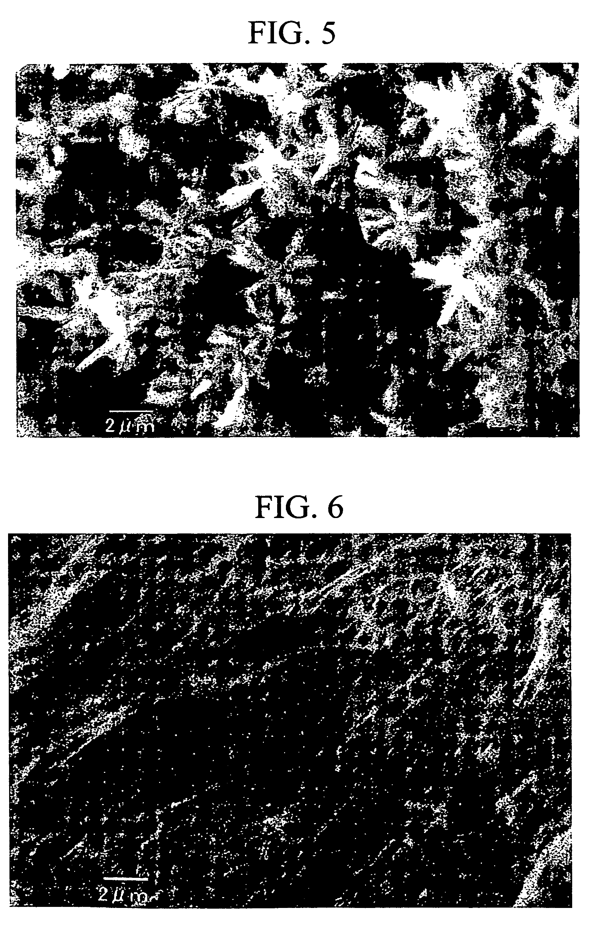

As a result of observation of the obtained organic-inorganic hybrid structure by means of a scanning electron microscope, in each of the organic-inorganic hybrid structures 31 to 35, an aggregate form in the form of an aster was confirmed. A scanning electron micrograph of the obtained organic-inorganic hybrid structure 34 is shown in Fig. 5.

### Example 4

### Organic-inorganic hybrid structure employing polyethyleneimine having a benzene ring as a center

B-PEI hydrogels (41) to (45) having concentrations shown in Table 3 were obtained in the same manner as that of Example 1, employing B-PEI synthesized in Synthesis Example 4 instead of employing the L-PEI powder in Example 1. In the obtained hydrogels, deformation occurred by exerting a shearing force, but a general shape could be maintained. The hydrogels were in the form of ice cream. The gelling temperatures of the obtained hydrogels are shown in Table 3.

As a result of an X-ray diffraction measurement for the obtained hydrogel (44), it was confirmed that at 20.3°, 27.3°, and 28.2°, scattering intensity peaks were observed. In addition, as a result of measurement of changes in endothermic conditions by means of a calorimetric analyzer, it was confirmed that an endothermic peak was observed at 55.3°C. From the measurement results, the presence of crystals of B-PEI in the hydrogel was confirmed.

**Table 3: Organic-inorganic hybrid structures obtained from various B-PEI concentrations**

| No. | 41 | 42 | 43 | 44 | 45 |
|---|---|---|---|---|---|
| B-PEI concentration (%) | 0.25 | 0.5 | 1.0 | 2.0 | 3.0 |
| TMOS/EtOH (1/1) mL | 1 | 1 | 2 | 2 | 2 |

To 1 mL of the hydrogel obtained above, 1 mL or 2 mL of a mixture of tetramethoxysilane (TMSO) and ethanol in 1/1 (volume ratio) was added, and the mixture in the form of ice cream was lightly stirred for one minute. Subsequently, the mixture was allowed to stand for 40 minutes as it was. Subsequently, the mixture was washed with an excess of acetone, and was cleaned by means of a centrifuge three times. The obtained solid was recovered, and dried at room temperature, thus obtaining organic-inorganic hybrid structures 41 to 45. As a result of an X-ray diffraction measurement for the obtained hydrogel structure 44, it was confirmed that at 20.5°, 27.5°, and 28.3°, scattering intensity peaks were observed.

As a result of observation of the obtained organic-inorganic hybrid structure by means of a scanning electron microscope, it was confirmed that each of the organic-inorganic hybrid structures 41 to 45 was in the form of a sponge in which fibrous aggregate forms were gathered. A scanning electron micrograph of the obtained organic-inorganic hybrid structure 44 is shown in Fig. 6.

### Example 5

### Hydrogel employing a block polymer

A PEG-b-PEI hydrogel 51 having a concentration of 5% of PEG-b-PEI was obtained in the same manner as that of Example 1, employing the PEG-b-PEI synthesized in Synthesis Example 5 instead of employing the L-PEI powder in Example 1.

To 1 mL of the hydrogel obtained above, 1.5 mL of a mixture of tetramethoxysilane (TMSO) and ethanol in 1/1 (volume ratio) was added, and the mixture in the form of ice cream was lightly stirred for one minute. Subsequently, the mixture was allowed to stand for 40 minutes as it was. Subsequently, the mixture was washed with an excess of acetone, and was cleaned by means of a centrifuge three times. The obtained solid was recovered, and dried at room temperature, thus obtaining organic-inorganic hybrid structure 51.

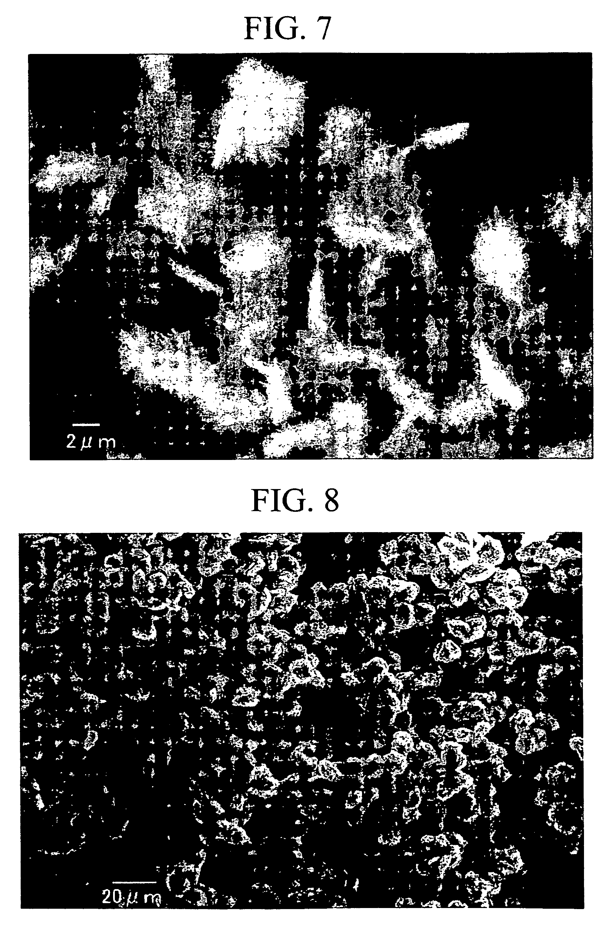

As a result of observation of the obtained organic-inorganic hybrid structure by means of a scanning electron microscope, it was confirmed that in the organic-inorganic hybrid structure 51, an aggregate form in the form of a cactus was confirmed. A scanning electron micrograph of the obtained organic-inorganic hybrid structure 51 is shown in Fig. 7.

### Example 6

### Organic-inorganic hybrid structure from a polyethyleneimine hydrogel including an organic solvent

Hydrogels (61) to (63) including organic solvents were obtained in the same manner as that of obtaining the hydrogel (14) of Example 1, with the exception of employing solution mixtures of water and hydrophilic organic solvents in which the organic solvents shown in Table 5 were added to water, instead of employing distilled water in Example 1. In the obtained hydrogel, deformation occurred by exerting a shearing force, but a general shape could be maintained. The hydrogel was in the form of ice cream.

**Table 4: Organic-inorganic hybrid structure obtained from a hydrogel containing an organic solvent**

| No. | 61 | 62 | 63 |
|---|---|---|---|
| Organic solvent contained | Acetone | DMF | EtOH |
| Amount of the solvent employed (%) | 25 | 25 | 25 |
| L-PEI concentration (%) | 1.0 | 1.0 | 1.0 |
| TMOS/EtOH (1/1) mL | 2 | 2 | 2 |

To 1 mL of the hydrogel obtained above, 1 mL or 2 mL of a mixture of tetramethoxysilane (TMSO) and ethanol in 1/1 (volume ratio) was added as shown in Table 4, and the mixture in the form of ice cream was lightly stirred for one minute. Subsequently, the mixture was allowed to stand for 40 minutes as it was. Subsequently, the mixture was washed with an excess of acetone, and was cleaned by means of a centrifuge three times. The obtained solid was recovered and dried at room temperature, thus obtaining organic-inorganic hybrid structures 61 to 63.

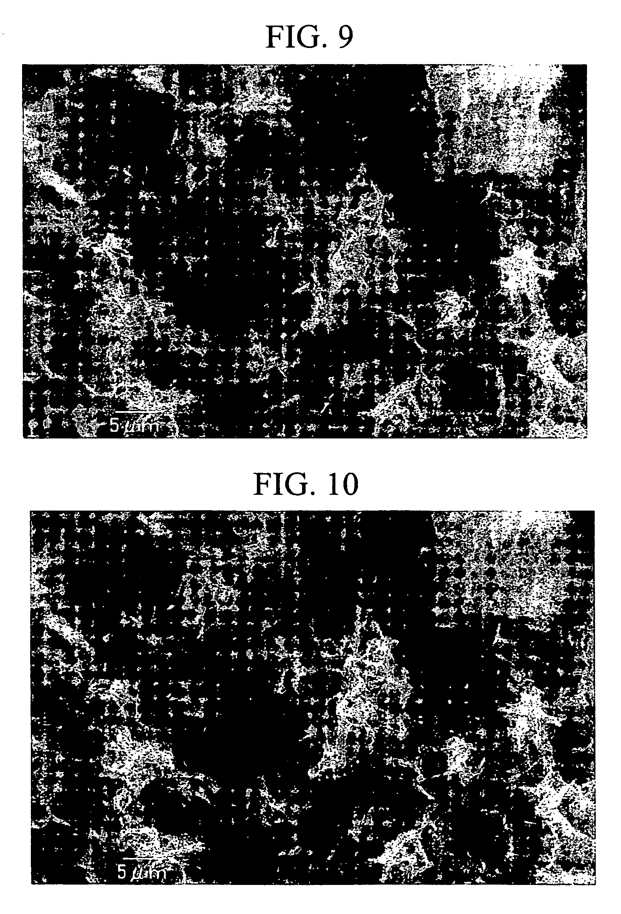

As a result of observation of the obtained organic-inorganic hybrid structure by means of a scanning electron microscope, it was confirmed that the organic-inorganic hybrid structures 61 to 63 had different aggregate forms. A scanning electron micrograph of the obtained organic-inorganic hybrid structure 61 is shown in Fig. 8. A scanning electron micrograph of the obtained organic-inorganic hybrid structure 62 is shown in Fig. 9. A scanning electron micrograph of the obtained organic-inorganic hybrid structure 63 is shown in Fig. 10.

### Example 7

### Organic-inorganic hybrid structure from a hydrogel of polyethyleneimine crosslinked by a dialdehyde

The hydrogel (15) having a concentration of 3% of L-PEI prepared in Example 1 was formed into a plate, and was added to 10 mL of an aqueous solution (5%) of glytaryl aldehyde. The mixture was allowed to stand for 24 hours at room temperature. The hydrogel before chemically crosslinking was in the form of ice cream, and could freely change the shape by means of a shearing force. In contrast, in the hydrogel obtained by chemically-crosslinking treatment, changes in the shape thereof by means of a shearing force did not occur.

The aforementioned plate was immersed in 2 mL of a mixture of TMOS/EtOH (1/1) for 24 hours. The plate was immersed in acetone repeatedly, and was washed. Thereby, an organic-inorganic hybrid structure 71 was obtained.

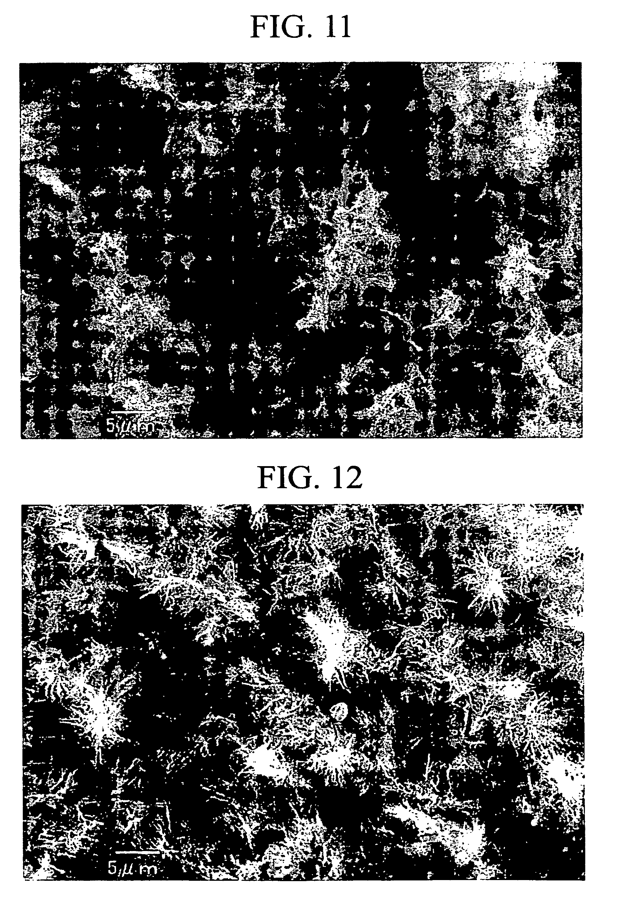

A scanning electron micrograph of the plate of the obtained organic-inorganic hybrid structure 71 is shown in Fig. 11. A scanning electron micrograph of the surface of the plate of the aforementioned organic-inorganic hybrid structure is shown in Fig. 12.

### INDUSTRIAL APPLICABILITY

An organic-inorganic hybrid nanofiber of the present invention includes a polymer having a straight-chain polyethyleneimine skeleton in which metal ions can be suitably concentrated on the center axis of the fiber, and for this reason, the organic-inorganic hybrid nanofiber can be usefully employed as a filter for removing metals. In addition, the polyethyleneimine skeleton in the polymer having the straight-chain polyethyleneimine skeleton can be easily cationized, and for this reason, various ionic substances can be adsorbed or trapped thereby. In addition, the polymer having the straight-chain polyethyleneimine skeleton can be easily grafted or make a block with other polymers, and for this reason, various functions originated from the other aforementioned polymer moieties can be provided. As described above, the organic-inorganic hybrid nanofiber of the present invention can easily provide the various aforementioned functions, in addition to superior molecule selectivity and large surface area which a silica possesses. Therefore, the organic-inorganic hybrid nanofiber is useful in various fields such as the field of electronic materials, the bioscience field, the field of environmentally responsive products, and the like.

In addition, the crystalline polymer filament in the organic-inorganic hybrid nanofiber of the present invention can be easily removed by sintering, and for this reason, the nanofiber of the present invention can be applied to production of a silica tube having a tubular space.

## Claims

1. An organic-inorganic hybrid nanofiber **characterized by** comprising a crystalline polymer filament made of a polymer having a straight-chain polyethyleneimine skeleton, and a silica covering said crystalline polymer filament.

2. The organic-inorganic hybrid nanofiber according to Claim 1, wherein said polymer having the straight-chain polyethyleneimine skeleton is in the form of a line, a star, or a comb.

3. The organic-inorganic hybrid nanofiber according to Claim 1, wherein said polymer having the straight-chain polyethyleneimine skeleton is composed of a block copolymer between a straight-chain polyethyleneimine block and other blocks.

4. The organic-inorganic hybrid nanofiber according to Claim 1, wherein a proportion of the polyethyleneimine skeleton in said polymer having the straight-chain polyethyleneimine skeleton is not less than 25% by mol.

5. The organic-inorganic hybrid nanofiber according to Claim 1, wherein an amount of the silica included is in a range of from 30 to 90% by weight.

6. The organic-inorganic hybrid nanofiber according to Claim 1, wherein a diameter thereof is in a range of from 10 to 1,000 nm.

7. The organic-inorganic hybrid nanofiber according to Claim 1, wherein a diameter of said crystalline polymer filament is in a range of from 1 to 100 nm.

8. An organic-inorganic hybrid structure **characterized in that** the hybrid structure is formed by mutually aggregating the organic-inorganic hybrid nanofibers according to any one of Claims 1 to 7 by means of aggregation of the crystalline polymer filaments themselves in said organic-inorganic hybrid nanofiber.

9. The organic-inorganic hybrid structure according to Claim 8, wherein said crystalline polymer filaments themselves are crosslinked by means of a crosslinker.

10. A method for producing an organic-inorganic hybrid nanofiber **characterized by** comprising the steps of
(1) obtaining a crystalline polymer filament of a polymer having a straight-chain polyethyleneimine skeleton by dissolving the polymer having the straight-chain polyethyleneimine skeleton in a solvent, followed by precipitation in the presence of water, and
(2) covering said crystalline polymer filament with a silica by contacting said crystalline polymer filament with an alkoxysilane in the presence of water.

11. The method for producing an organic-inorganic hybrid nanofiber according to Claim 10, wherein said alkoxysilane is an alkoxysilane having 3 or more valences.

12. The method for producing an organic-inorganic hybrid nanofiber according to Claim 10, wherein in said step (2), an amount of the alkoxysilane to be contacted with the crystalline polymer filament is in a range of from 2 to 1,000 times with respect to one equivalent of an ethyleneimine unit of the polymer having the straight-chain polyethyleneimine skeleton for forming the crystalline polymer filament.

13. A method for producing an organic-inorganic hybrid structure **characterized by** comprising the steps of
(1') obtaining a crystalline polymer filament of a polymer having a straight-chain polyethyleneimine skeleton and at the same time, obtaining a hydrogel formed from said crystalline polymer filament, by dissolving, in a solvent, the polymer having the straight-chain polyethyleneimine skeleton in an amount ranging from 0.01 to 20% by weight with respect to the total amount of the polymer having the straight-chain polyethyleneimine skeleton and the solvent, followed by precipitation in the presence of water, and
(2') covering the crystalline polymer filament in said hydrogel with a silica by contacting the hydrogel formed from said crystalline polymer filament with an alkoxysilane in the presence of water.

14. The method for producing an organic-inorganic hybrid structure according to Claim 13, wherein after said step (1'), said hydrogel is crosslinked by means of a crosslinker.

15. The method for producing an organic-inorganic hybrid structure according to Claim 13 or 14, wherein said alkoxysilane is an alkoxysilane having 3 or more valences.

16. The method for producing an organic-inorganic hybrid structure according to Claim 13, wherein in said step (2'), an amount of the alkoxysilane to be contacted with said hydrogel is in a range of from 2 to 1,000 times with respect to one equivalent of an ethyleneimine unit of the polymer having the straight-chain polyethyleneimine skeleton for forming the crystalline polymer filament in said hydrogel.

## Patentansprüche

1. Organisch-anorganische Hybridnanofaser, charakterisiert **dadurch**, dass sie ein kristallines Polymerfilament, hergestellt aus einem Polymer mit einem geradkettigen Polyethylenimingerüst, und ein Siliciumdioxid, das das kristalline Polymerfilament bedeckt, umfasst.

2. Organisch-anorganische Hybridnanofaser gemäß Anspruch 1, wobei das Polymer mit dem geradkettigen Polyethylenimingerüst in Form einer Linie, eines Sterns oder eines Kamms ist.

3. Organisch-anorganische Hybridnanofaser gemäß Anspruch 1, wobei das Polymer mit dem geradkettigen Polyethylenimingerüst aus einem Blockcopolymer zwischen einem geradkettigen Polyethyleniminblock und anderen Blöcken besteht.

4. Organisch-anorganische Hybridnanofaser gemäß Anspruch 1, wobei der Anteil des Polyethylenimingerüsts im Polymer mit dem geradkettigen Polyethylenimingerüst nicht weniger als 25 Mol-% beträgt.

5. Organisch-anorganische Hybridnanofaser gemäß Anspruch 1, wobei die Menge an eingearbeitetem Siliciumdioxid in einem Bereich von 30 bis 90 Gew.-% liegt.

6. Organisch-anorganische Hybridnanofaser gemäß Anspruch 1, wobei deren Durchmesser in einem Bereich von 10 bis 1.000 nm liegt.

7. Organisch-anorganische Hybridnanofaser gemäß Anspruch 1, wobei der Durchmesser des kristallinen Polymerfilaments in einem Bereich von 1 bis 100 nm liegt.

8. Organisch-anorganische Hybridstruktur, **dadurch** charakterisiert, dass die Hybridstruktur gebildet wird durch wechselseitige Aggregation der organisch-anorganischen Hybridnanofasern gemäß einem beliebigen der Ansprüche 1 bis 7 mittels Aggregation der kristallinen Polymerfilamente selbst in der organisch-anorganischen Hybridnanofaser.

9. Organisch-anorganische Hybridstruktur gemäß Anspruch 8, wobei die kristallinen Polymerfilamente selbst mittels eines Vernetzungsmittels vernetzt sind.

10. Verfahren zur Herstellung einer organisch-anorganischen Hybridnanofaser, **dadurch** charakterisiert, dass es die folgenden Schritte umfasst:
(1) Erhalten eines kristallinen Polymerfilaments eines Polymers mit einem geradkettigen Polyethylenimingerüst durch Lösen des Polymers mit dem geradkettigen Polyethylenimingerüst in einem Lösungsmittel, gefolgt von Ausfällen in Gegenwart von Wasser, sowie
(2) Bedecken des kristallinen Polymerfilaments mit einem Siliciumdioxid durch Inkontaktbringen des kristallinen Polymerfilaments mit einem Alkoxysilan in Gegenwart von Wasser.

11. Verfahren zur Herstellung einer organisch-anorganischen Hybridnanofaser gemäß Anspruch 10, wobei das Alkoxysilan ein Alkoxysilan mit 3 oder mehr Valenzen ist.

12. Verfahren zur Herstellung einer organisch-anorganischen Hybridnanofaser gemäß Anspruch 10, wobei im Schritt (2) die Menge des Alkoxysilans, das mit dem kristallinen Polymerfilament in Kontakt zu bringen ist, in einem Bereich des 2- bis 1.000-fachen bezüglich eines Äquivalents einer Ethylenimineinheit des Polymers mit dem geradkettigen Polyethylenimingerüst zur Bildung des kristallinen Polymerfilaments beträgt.

13. Verfahren zur Herstellung einer organisch-anorganischen Hybridstruktur, **dadurch** charakterisiert, dass es die folgenden Schritte umfasst:
(1') Erhalten eines kristallinen Polymerfilaments eines Polymers mit einem geradkettigen Polyethylenimingerüst und gleichzeitig Erhalten eines Hydrogels, gebildet aus dem kristallinen Polymerfilament durch Auflösen des Polymers mit dem geradkettigen Polyethylenimingerüst in einem Lösungsmittel in einer Menge, die von 0,01 bis 20 Gew.-% bezüglich der gesamten Menge des Polymers mit dem geradkettigen Polyethylenimingerüst und dem Lösungsmittel reicht, gefolgt von Ausfällen in Gegenwart von Wasser, und
(2') Bedecken des kristallinen Polymerfilaments in dem Hydrogel mit einem Siliciumdioxid durch Inkontaktbringen des Hydrogels, gebildet aus dem kristallinen Polymerfilament mit einem Alkoxysilan in der Gegenwart von Wasser.

14. Verfahren zur Herstellung einer organisch-anorganischen Hybridstruktur gemäß Anspruch 13, wobei nach dem Schritt (1') das Hydrogel mittels eines Vernetzungsmittels vernetzt wird.

15. Verfahren zur Herstellung einer organisch-anorganischen Hybridstruktur gemäß Anspruch 13 oder 14, wobei das Alkoxysilan ein Alkoxysilan mit 3 oder mehr Valenzen ist.

16. Verfahren zur Herstellung einer organisch-anorganischen Hybridstruktur gemäß Anspruch 13, wobei im Schritt (2') die Menge des mit dem Hydrogel in Kontakt zu bringenden Alkoxysilans in einem Bereich des 2- bis 1.000-fachen bezüglich eines Äquivalents einer Ethylenimineinheit des Polymers mit dem geradkettigen Polyethylenimingerüst zur Bildung des kristallinen Polymerfilaments in dem Hydrogel beträgt.

## Revendications

1. Nanofibre hybride organique-inorganique **caractérisée en ce qu'**elle comprend un filament de polymère cristallin constitué d'un polymère ayant un squelette de polyéthylèneimine à chaîne droite et une silice couvrant ledit filament polymère cristallin.

2. Nanofibre hybride organique-inorganique selon la revendication 1, dans laquelle ledit polymère ayant le squelette de polyéthylèneimine à chaîne droite est sous la forme d'une ligne, d'une étoile, ou d'un peigne.

3. Nanofibre hybride organique-inorganique selon la revendication 1, dans laquelle ledit polymère ayant le squelette de polyéthylèneimine à chaîne droite est composé d'un copolymère séquencé entre un bloc de polyéthylèneimine à chaîne droite et d'autres blocs.

4. Nanofibre hybride organique-inorganique selon la revendication 1, dans laquelle une proportion du squelette de polyéthylèneimine dans ledit polymère ayant le squelette de polyéthylèneimine à chaîne droite n'est pas inférieure à 25% en mole.

5. Nanofibre hybride organique-inorganique selon la revendication 1, dans laquelle une quantité de silice comprise est dans une gamme de 30 à 90% en poids.

6. Nanofibre hybride organique-inorganique selon la revendication 1, dans laquelle un diamètre correspondant est dans une gamme de 10 à 1000 nm.

7. Nanofibre hybride organique-inorganique selon la revendication 1, dans laquelle un diamètre dudit filament de polymère cristallin est dans une gamme de 1 à 100 nm.

8. Structure hybride organique-inorganique **caractérisée en ce que** la structure hybride est formée en regroupant réciproquement les nanofibres hybrides organiques-inorganiques selon l'une quelconque des revendications 1 à 7, au moyen de l'agrégation des filaments de polymère cristallin eux-mêmes dans ladite nanofibre hybride organique-inorganique.

9. Structure hybride organique-inorganique selon la revendication 8, dans laquelle lesdits filaments de polymère cristallins eux-mêmes sont réticulés au moyen d'un agent de réticulation.

10. Procédé pour produire une nanofibre hybride organique-inorganique **caractérisé en ce qu'**il comprend les étapes consistant à :
(1) obtenir un filament de polymère cristallin d'un polymère ayant un squelette de polyéthylèneimine à chaîne droite, en dissolvant le polymère ayant le squelette de polyéthylèneimine à chaîne droite dans un solvant, suivi de la précipitation en présence d'eau, et
(2) couvrir ledit filament de polymère avec une silice en mettant en contact ledit filament de polymère cristallin avec un alcoxysilane en présence d'eau.

11. Procédé de production d'une nanofibre hybride organique-inorganique selon la revendication 10, dans lequel ledit alcoxysilane est un alcoxysilane ayant 3 valences ou plus.

12. Procédé de production d'une nanofibre hybride organique-inorganique selon la revendication 10, dans lequel dans ladite étape (2), une quantité de l'alcoxysilane à mettre en contact avec le filament de polymère cristalline est dans une gamme de 2 à 1000 fois relativement à un équivalent d'une unité d'éthylèneimine du polymère, ayant le squelette de polyéthylèneimine à chaîne droite pour former le filament de polymère cristallin.

13. Procédé de production d'une structure hybride organique-inorganique **caractérisé en ce qu'**il comprend les étapes consistant à :
(1') obtenir un filament de polymère cristallin d'un polymère ayant un squelette de polyéthylèneimine à chaîne droite et en même temps, obtenir un hydrogel formé à partir dudit filament de polymère cristallin, en dissolvant, dans un solvant, le polymère ayant le squelette de polyéthylèneimiine à chaîne droite dans une quantité comprise entre 0,01 et 20% en poids, relativement à la quantité totale du polymère, ayant la squelette de polyéthylèneimine à chaîne droite et le solvant, suivi d'une précipitation en présence d'eau, et
(2') couvrir le filament de polymère cristallin dans ledit hydrogel avec une silice en mettant en contact l'hydrogel formé à partir dudit filament de polymère cristallin avec un alcoxysilane en présence d'eau.

14. Procédé de production d'une structure hybride organique-inorganique selon la revendication 13, dans lequel après ladite étape (1'), ledit hydrogel est réticulé au moyen d'un agent réticulant.

15. Procédé de production d'une structure hybride organique-inorganique selon la revendication 13 ou 14, dans lequel ledit alcoxysilane est un alcoxysilane ayant 3 valences ou plus.

16. Procédé de production d'une structure hybride organique-inorganique selon la revendication 13, dans lequel dans ladite étape (2'), une quantité de l'alcoxysilane à mettre en contact avec ledit hydrogel est dans une gamme de 2 à 1000 fois relativement à un équivalent d'une unité d'éthylèneimine du polymère ayant le squelette de polyéthylèneimine à chaîne droite, pour former le filament de polymère cristallin dans ledit hydrogel.
